(19) Europäisches Patentamt
European Patent Office
Office européen des brevets

(11) **EP 1 572 800 B2**

(12) **NEW EUROPEAN PATENT SPECIFICATION**
After opposition procedure

(45) Date of publication and mention of the opposition decision:
**14.04.2010 Bulletin 2010/15**

(45) Mention of the grant of the patent:
**20.09.2006 Bulletin 2006/38**

(21) Application number: **03809320.9**

(22) Date of filing: **24.10.2003**

(51) Int Cl.:
***C08K 13/02*** *(2006.01)* *C08K 13/02* *(2006.01)*
*C08K 5/3435* *(2006.01)* *C08K 5/1515* *(2006.01)*
*C08K 3/16* *(2006.01)*

(86) International application number:
**PCT/EP2003/011796**

(87) International publication number:
**WO 2004/037910 (06.05.2004 Gazette 2004/19)**

# (54) STABILIZERS FOR HALOGENATED RESINS IN PLASTIFIED FORMULATIONS

STABILISATOREN FÜR HALOGENIERTE HARZE IN WEICHGEMACHTEN FORMULIERUNGEN

STABILISANTS POUR DES RESINES HALOGENEES PRESENTES DANS DES FORMULATIONS PLASTIFIEES

(84) Designated Contracting States:
**AT BE BG CH CY CZ DE DK EE ES FI FR GB GR HU IE IT LI LU MC NL PT RO SE SI SK TR**

(30) Priority: **25.10.2002 IT MI20022275**

(43) Date of publication of application:
**14.09.2005 Bulletin 2005/37**

(73) Proprietor: **Reagens S.p.A.**
**40016 S. Giorgio Di Piano (IT)**

(72) Inventor: **BERNA, Mario**
**I-40137 Bologna (IT)**

(74) Representative: **Gervasi, Gemma et al**
**Notarbartolo & Gervasi S.p.A.**
**Corso di Porta Vittoria 9**
**20122 Milano (IT)**

(56) References cited:
**EP-A- 0 344 321**
**EP-A2- 0 677 550**
**EP-A2- 0 677 551**
**EP-A2- 0 768 336**
**US-A- 4 957 954**
**US-A- 5 519 077**
**US-A- 5 925 696**

Remarks:
The file contains technical information submitted after the application was filed and not included in this specification



Printed by Jouve, 75001 PARIS (FR)

## Description

### Field of the invention

The invention relates to stabilizing compositions for halogenated resins in plastified formulations, in particular flexible polyvinyl chloride (PVC), and to polyvinyl-chloride resins in plastified formulations which comprise said stabilizing compositions. More specifically the invention regards compositions that bestow on polyvinyl-chloride resins in plastified formulations excellent stability to thermal degradation in the processing phase, a considerable resistance to deterioration when exposed to sunlight, and a significant improvement in the ageing properties at medium temperatures (70-120°C).

### State of the art

Halogenated resins and in particular polyvinyl chloride (PVC) may be stabilized by a large number of additives. Research has increasingly been directed at the substitution of stabilizers with high ecological impact, such as lead or cadmium, with new stabilizing compositions which, maintaining the same efficiency of the aforesaid stabilizers, also present characteristics of better ecological compatibility.

It is commonly known how articles made of PVC, when exposed to the open air for a long period of time, are subject to a deterioration of their mechanical properties and to a variation in colour caused by sunlight, ultraviolet light, and various atmospheric conditions. Research has thus directed attention to stabilizing formulations which help to improve the performance also from these standpoints. In polyolefins the use of sterically hindered amines (HALS) has been studied in depth for their ability to improve stability to light and to ultraviolet rays, so that they are generally defined and used as stabilizers to light for halogenated resins. In PVC, however, the addition of HALS does not normally cause the desired effects, probably for the action of hydrochloric acid on the amine group.

The use of substances containing the piperidinyl group, characteristic of numerous HALS, in association with perchlorates, as described in the U.S. patents US 4,957,954 and US 5,025,051, in polyvinyl-chloride resins, leads to an improvement in stability to light but only to a modest performance as regards thermal stability.

In this regard, thermal stabilizers based upon zinc soaps have been developed, which present a good level of efficacy, for example in combination with terminal epoxide compounds and inert mineral fillers (US 5,492,949). Also the use of perchlorates is known to be valid for improving thermal stability. The state of the art also presents combinations of perchlorates with epoxide compounds as effective in thermal stabilization of polyvinyl chloride in formulations to obtain flexible polyvinyl chloride (US 5,543,449 and US 5,519,077).

It is thus felt the need to develop new stabilizing compositions capable of giving to halogenated resins in plastified formulations, in particular flexible polyvinyl chloride (PVC), even more improved properties of thermal stability, also at high temperatures, and of stability to light and to ultraviolet radiation.

### Summary of the invention

It has now been discovered that the combined use of a terminal epoxide compound with a perchlorate and a sterically hindered amine (HALS) as claimed in claim 1, as essential components of a stabilizing composition to be used in halogenated resins in plastified formulations, in particular flexible polyvinyl chloride (PVC), through the synergy of said components, leads to a considerable increase in thermal stability and stability to light of said halogenated resins in plastified formulations, unlike what occurs with the use of the individual components or the use of mixtures of any two of them.

The applicant has surprisingly come across a stabilizing composition which comprises as essential components: a) a hindered amine (HALS), b) a terminal epoxide compound and c) a perchlorate as claimed in claim 2. Said stabilizing composition is able to confer a high thermal stability and a high stability to light to halogenated resins in plastified formulations, in particular to flexible polyvinyl chloride (PVC).

### Description of the figures

Figures 1-6 show comparative charts of the specimen subjected to static thermal-stability testing at 180°C or 190°C as a function of time.

In detail:

> **Figure 1** gives the variation in colour as a function of time of specimens prepared with mixes having compositions as indicated in Table 1, which use as stabilizing system the products indicated in Tables 2 and 3. The mixes containing the stabilizing composition object of the present invention (mixes 1-5) show excellent colour fastness and final stability, that are better than those shown by the stabilizing systems with just one or two components (mixes 6-23).

**Figure 2** not according to the invention gives the variation in colour as a function of time of specimens prepared with mixes having compositions as indicated in Table 1, which use as stabilizing system the products indicated in Tables 5 and 6. The mixes containing the stabilizing composition that forms the object of the present invention (mixes 24-28) show a colour fastness and a final stability that are better than those presented by stabilizing systems with just one or two components (mixes 29-46).

**Figures 3 and 4** give the variation in colour as a function of time of specimens prepared with mixes having compositions as indicated in Table 1, which use as stabilizing system the products indicated in Tables 2 and 8. Different dosages of the fundamental components of the stabilizing composition forming the object of the invention always guarantee a considerable efficacy in terms of colour fastness and a better final stability.

**Figure 5** gives the variation in colour as a function of time of specimens prepared with mixes having compositions as indicated in Table 1, which use as stabilizing system the products indicated in Table 10. The mixes containing the stabilizing composition forming the object of the present invention (mixes 67-86) manifest excellent colour fastness and final stability.

**Figure 7** shows the colorimetric reference table for evaluation of static thermal **Figure 6** gives the variation in colour as a function of time of specimens prepared with mixes having compositions as indicated in Table 1, which use as stabilizing system the products indicated in Table 12. The mixes containing the stabilizing composition forming the object of the present invention (mixes 87-108) manifest excellent colour fastness and final stability. stability.

**Figure 8** is a graph **(Graph 1)** which gives the results of accelerated ageing to light in a Ci 4000 Xenon arc Weather-Ometer; ageing is expressed in numerical value using the parameter DE, which represents the chromatic difference in colorimetric space. The specimens prepared with mixes having compositions as indicated in Table 1, which use as stabilizing system the products indicated in Example 5 of Table 2, and Examples 6, 9 and 23 of Table 3 were subjected to accelerated ageing in the conditions described by the ISO 4892-2 standard, namely:

Radiation: total spectrum
Filtering optical system: Boros/Boros (filter with borosilicates that allows passage of only 340-nm radiation)
Irradiation at 340 nm: 0.47 $W/m^2$
Temperature of the black panel: 55°C
Control of the temperature inside the chamber: 33°C
Average humidity in the chamber: 60%
Dry/humid cycle: 102 min/18 min.

It emerges from the graph that the mix containing the stabilizing composition forming the object of the present invention (mix 5) has a significantly higher stability to light than the mixes with stabilizing compositions based upon a single component (mix 6) and a higher or equivalent stability to light than mixes based upon two components (mix 9 and 23, respectively): It should be added that, although mix 23 has a stability to light that is similar to that of mix 6, it shows a lower stability to thermal degradation during processing.

## Detailed description of the invention

Therefore, the object of the present invention is a composition according to claim 1.

*Hindered amines*

Amongst the hindered amines of a polyalkylpiperidine type according to the present invention, particular preference is given to the compositions described above, in which the derivative of the polyalkylpiperidine is a 2,2,6,6-tetramethylpiperidine (R=H in formula (1)).

The following compounds are considered for the purposes of the present invention:

- bis(1,2,2,6,6-pentamethyl-4-piperidyl)sebacate
- bis(2,2,6,6-tetramethyl-4-piperidyl)sebacate
- poly[6-morpholino-1,3,5-triazin-2,4-diyl]-[(1,2,2,6,6-pentamethyl-4-piperidyl)imino]hexamethylene[(1,2,2,6,6 pentamethyl-4-piperidyl-imino)] where the number of repetitive units ranges from 2 to 20
- 1,5,8,12-tetrakis[4,6-bis(N-butyl-N-1,2,2,6,6-pentamethyl-4-piperidylamino)-1,3,5-triazin-2-yl]-1,5,8,12-tetraazododecane
- poly[[6-[(1,1,3,3-tetramethylbutyl)amino]-1,3,5-triazin-2,4-diyl]-[(2,2,6,6-tetramethyl-4-piperidyl)imino]hexamethylene[(2,2,6,6-tetramethyl-4-piperidylimino)]], where the number of repetitive units ranges from 2 to 20.

*Perchlorates*

As regards the perchlorates according to the present invention, the perchlorates may be used in various forms, for example as salts or solutions, whether aqueous or organic, supported on various materials, such as PVC, calcium silicate, zeolites or hydrotalcites, or bound to a hydrotalcite by means of a chemical reaction. In addition, there are considered and preferentially used the complexes of metallic perchlorate, for example sodium perchlorate, with triethylene glycol, butyl diglycol and polyethylene glycol. Among all the perchlorates for the purposes of the present invention are the following perchlorates: sodium perchlorate, magnesium perchlorate, calcium perchlorate.

*Terminal epoxide compounds*

The terminal epoxide compounds according to the present invention are compounds that possess at least one functional group of a terminal oxyrane type. The terminal epoxide compounds that may be used in the present invention may have an aliphatic, cycloaliphatic, aromatic, arylaliphatic, heterocyclic structure containing the epoxide group in a side chain. The epoxide groups are preferably bound to the rest of the molecole as glycidyl groups via ether or ester bonds, or are N-glycidyl derivatives of heterocyclic amines, amides or imides. Epoxide compounds of this type are known in general terms and are commercially available.

The epoxide compounds according to the present invention contain at least one epoxide radical of formula (5):

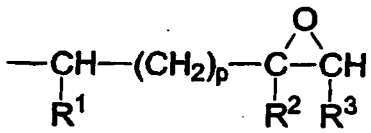

**(5)**

where $R^1$ and $R^3$ are both hydrogen, $R^2$ is hydrogen or methyl and p is equal to 0, or where $R^1$ and $R^3$ are together $-CH_2-CH_2-$ or $-CH_2-CH_2-CH_2-$, $R^2$ is hydrogen, and p is 0 or 1, and this epoxide is bound directly to carbon, oxygen, nitrogen, or sulphur atoms.

Preference is given to compounds containing as functional groups at least two terminal epoxides. However, in principle it is possible to use compounds containing a single epoxide group.

Epoxide compounds, in particular diglycidyl compounds, having aromatic groups are the most used. If so desired, a mixture of different epoxides may be used.

Examples of terminal epoxide compounds that may be used are:

- diglycidyl ethers of bisphenol A, liquid epoxy resins, such as Epikote ® 828 or Epikote ® 214;
- diglycidyl ethers of bisphenol A, solid epoxy resins, such as Epikote ® 1001, Epikote ® 1002, Epikote ® 1004, Epikote ® 1007, or Epikote ® 1009;
- diglycidyl ethers of bisphenol F, liquid epoxy resins, such as Araldit ® GY281, Araldit ® PY302, or Araldit ® PY306
- liquid glycidyl ester of carboxylic acids, such as the glycidyl ester of a highly branched $C_{10}$ versatic acid of formula (6):

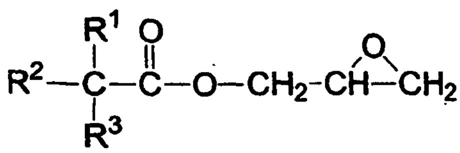

**(6)**

where $R^1$ is methyl, $R^2$, $R^3$ are alkyl groups, known as Shell Cardura ® E10, terephthalates, trimellitates, Araldit ® PY284; and
- solid heterocyclic epoxy resins, such as for example the trifunctional epoxy resin of triglycidyl isocyanurate, known as Araldit ® PT810, or the multifunctional epoxy resin, mixture of the glycidyl esters of terephthalic acid and of trimellitic acid, known as Araldit ® PT 910.

Terminal epoxide compounds preferentially used according to the present invention are:

Epikote ® 828 (produced by Shell), Araldit ® PT810 and Araldit ® PT910 (marketed by Vantico).

A further improvement in the already high degree of thermal stability and stability to light obtained by means of the synergy of the above essential components, may be achieved by means of the use, in combination with the essential components, of at least one of the following compounds: d) metallic soaps, e) organic phosphites, f) antioxidants, g) organic co-stabilizers (β-diketones and dihydropyridines or polydihydropyridines, uracyl derivatives), h) polyols, i) zeolites and hydrotalcites, j) hydrates and oxides of alkaline and alkaline-earth metals. The advantages of the present invention may therefore be achieved by a composition which comprises: a) a hindered amine b) a terminal epoxide compound, c) a perchlorate, and may be further improved by the possible addition of compounds belonging to the following classes: d) metallic soaps, e) phosphites, f) antioxidants, g) organic co-stabilizers (β-diketones and dihydropyridines or polydihydropyridines, uracyl derivatives), h) polyols i) zeolites and hydrotalcites, j) hydrates and oxides of alkaline and alkaline-earth metals.

Consequently, a further subject of the present invention is a stabilizing composition which comprises, in addition to the essential components referred to above, at least one of the compounds chosen from the group consisting of: d) metallic soaps, e) organic phosphites, f) antioxidants, g) organic co-stabilizers (β-diketones and dihydropyridines or polydihydropyridines, uracyl derivatives), h) polyols, i) zeolites and hydrotalcites, j) hydrates and oxides of alkaline and alkaline-earth metals.

*Metallic soaps*

By metallic soaps according to the present invention are meant all the metallic soaps ordinarily used as stabilizers for PVC; these are principally metallic carboxylates of long-chain carboxylic acids. Known and customary examples are the laurates and the stearates, but also ethylhexoates, oleates and salts of short-chain alkylcarboxylic acids. Preference is given to organic metallic soaps of the series constituted by saturated $C_2$-$C_{22}$ aliphatic carboxylates, unsaturated $C_3$-$C_{22}$ aliphatic carboxylates, saturated $C_2$-$C_{22}$ aliphatic carboxylates that are substituted by at least one OH group, cyclic and bicyclic carboxylates which have 5-22 carbon atoms and which are not substituted, substituted by at least one OH group, and/or $C_1$-$C_{16}$ phenylcarboxylates, which are alkyl-substituted, non-substituted, substituted by at least one OH group, or $C_1$-$C_{16}$ alkyl-substituted naphthylcarboxylates, phenyl $C_1$-$C_{16}$ alkyl carboxylates, naphthyl $C_1$-$C_{16}$ carboxylates, either alkyl-substituted or non-substituted, or phenolates, tallates, $C_1$-$C_{12}$ alkyl-substituted resinates. Preference is given to the carboxylates of calcium, zinc, magnesium and potassium of carboxylic acids having from 7 to 18 carbon atoms, for example benzoates or alkanoates, preferably stearates, oleates, laurates, n-octoates, palmitates, behenates, hydroxystearates, dihydroxystearates, and 2-ethylhexoates. Superbasic carboxylates, such as for example superbasic zinc octanoate, are to be considered preferred. It is also possible to use a mixture of carboxylates having a different structure. Preference is given to the compositions as described above which comprise a zinc and/or calcium soap. Salts of Zn, Li, K, Mg and Ca of the above-mentioned fatty acids present a marked synergy with the fundamental components of the present invention.

*Phosphite*

Useful phosphites according to the present invention are organic phosphites of general formula $P(OR)_3$, where the radicals R are identical to or different from one another and may be $C_6$-$C_{18}$ alkyl, $C_6$-$C_{18}$ alkenyl, phenyl, mono-alkylphenyl or di-alkylphenyl, or $C_5$-$C_7$ cycloalkyl. Also considered are acidic phosphites of general formula $P(OH)R_2$, where the R radicals are identical to or different from one another, and are $C_6$-$C_{18}$ alkyl, $C_6$-$C_{18}$ alkenyl, phenyl, mono-alkylphenyl or di-alkylphenyl, or $C_5$-$C_7$ cycloalkyl.

There may also be used phosphites of general formula (7):

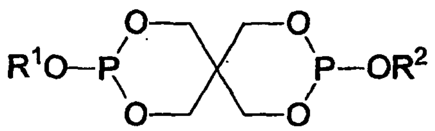

**(7)**

where $R^1$ and $R^2$ are identical to or different from one another and are $C_6$-$C_{18}$ alkyl, $C_6$-$C_{18}$ alkenyl, phenyl, mono-alkylphenyl or di-alkylphenyl, or $C_5$-$C_7$ cycloalkyl. Considered preferential are the phosphites of formula (7), where $R^1$, $R^2$ = stearyl or

There may also be used phosphites of general formula (8)

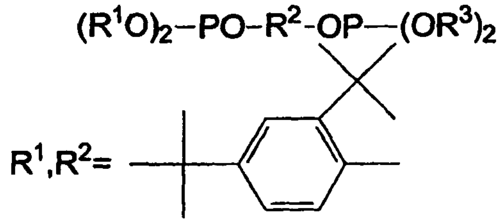

(8)

where $R^1$ and $R^3$ are identical to or different from one another and are $C_6$-$C_{18}$ alkyl, $C_6$-$C_{18}$ alkenyl, phenyl, mono-alkylphenyl or di-alkylphenyl, or $C_5$-$C_7$ cycloalkyl, $R^2$ is alkyl, alkyloxy, aryl or arylalkyl. In the case where the substituents $R^1$ or $R^3$ are different from one another, also the compound of formula (8') is considered as preferential

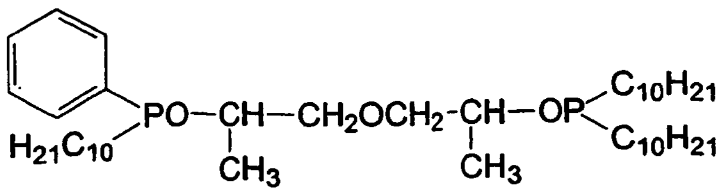

(8')

Each $C_6$-$C_{18}$ alkyl substituent present is, for example, n-hexyl, n-octyl, n-nonyl, decyl, dodecyl, tetradecyl, hexadecyl, octadecyl. Preference is given to the groups having from 8 to 18 carbon atoms. Phenyl-substituted groups for R,$R^1$,$R^2$,$R^3$ are for example tolyl, ethylphenyl, xilyl, cumyl, cimyl, cresyl, 4-methoxyphenyl, 2,4-dimethoxyphenyl, ethoxyphenyl, butoxyphenyl, p-n-octyl phenyl, p-n-nonylphenyl, or p-n-dodecylphenyl.

Among the preferentially used phosphites are the following:

tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropylene glycol diphosphite, 4,4' isopropylidenediphenol tetra ($C_{12-15}$ alcohol)phosphite, bis(2,4-di-t-butylphenyl)pentaerythritol diphosphite, distearyl pentaerythritol diphosphite.

*Organic antioxidants*

The organic antioxidants used in the present invention are chosen from among the ones already known as additives for plastic materials. A synergistic effect with the components cited above is manifested by antioxidants valid examples of which fall within the following classes:

1. Alkylidene bisphenols, for example 4,4'-isopropylidene diphenol, 2,2'-methylene-bis(6-ter butyl-4-methylphenol), 2,2'-methylene-bis(6-ter-butyl-4-ethylphenol), 2,2'-methylene-bis[4-methyl-6-(α-methylcyclohexyl)phenol], 2,2'-methylene-bis(4-methyl-6-cyclohexylphenol), 2,2'-methylene-bis(6-nonyl-4-methylphenol), 2,2'-methylene-bis(4,6-di-ter-butylphenol), 2,2'-ethylidene-bis(4,6-di-ter-butylphenol), 2,2'-ethylidene-bis(6-ter-butyl-4-isobutylphenol), 2,2'-methylene-bis[6-(α-methylbenzyl)-4-nonylphenol], 2,2'-methylene-bis[6-(α,α-dimethylbenzyl)-4-nonylphenol], 4,4'-methylene-bis(2,6-di-ter-butylphenol), 4,4'-methylene-bis(6-ter-butyl-2-methylphenol), 1,1-bis(5-ter-butyl-4-hydroxy-2-methylphenyl)butane, 2,6-bis(3-ter-butyl-5-methyl-2-hydroxybenzyl)-4-methylphenol, 1,1,3-tri(5-ter-butyl-4-hydroxy-2-methylphenyl)butane, 1,1-bis(5-ter butyl-4-hydroxy-2-methylphenyl)-3-n-dodecylmercaptobutane, ethylene glycol bis[3,3-bis(3'-ter-butyl-4'-hydroxyphenyl)butyrate], bis(3-ter-butyl-4-hydroxy-5-methylphenyl)dicyclopentadiene, bis[2-(3'-ter-butyl-2'-hydroxy-5'-methylbenzyl)-6-ter-butyl-4-methyl-phenyl]terephthalate, 1,1-bis (3,5-dimethyl-2-hydroxyphenyl)butane, 2,2-bis(3,5-di-ter-butyl-4-hydroxyphenyl)propane, 2,2-bis(4-hydroxyphenyl) propane, 2,2-bis(5-ter-butyl-4-hydroxy-2-methylphenyl)-4-n-dodecylmercaptobutane, 1,1,5,5-tetra-(5-ter-butyl-4-hydroxy-2-methylphenyl)pentane.

**2.** Esters of β-(3,5-di-ter-butyl-4-hydroxyphenyl)propionic acid with mono- or Poly-alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl)

isocyanurate, N,N'-bis(hydroxyethyl)oxalamide, 3-thioundecanol, 3-thiopentadecanol, trimethylhexanediol, trimethylolpropane, ditrimethylolpropane, 4-hydroxymethyl-1-phospha-2,6,7-trioxabicyclo-[2.2.2]-octane.

**3.** Esters of β-(5-ter-butyl-4-hydroxy-3-methylphenyl)propionic acid with mono- or poly-alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, 4-hydroxymethyl-1-phospha-2,6,7-trioxabicyclo-[2.2.2]-octane.

**4.** Esters of β-(3,5-dicyclohexyl-4-hydroxyphenyl)propionic acid with mono- or poly-alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N, N'-bis(hydroxyethyl)oxalamide, 3-thioundecanol, trimethylolpropane, 4-hydroxymethyl-1-phospha-2,6,7-trioxabicyclo-[2.2.2]-octane. Particular preference is given to 2,2'-methylene-bis(6-ter-butyl-4-methylphenol), commercially available as Lowinox ® 22 M46, produced by Great Lakes Chem. Corp., and to esters of β-(3,5-di-ter-butyl-4-hydroxyphenyl)propionic acid with octadecanol and with pentaerythritol, known as Arenox ® A76 and Arenox ® A10 respectively, produced by Reagens, and to bisphenol A.

*Organic co-stabilizers*

In order to increase the efficacy of the stabilizing system, organic co-stabilizers are use ; in particular the following are used: 1) β-diketone compounds, 2) dihydropyridines or polydihydropyridines, 3) uracyl derivatives.

**1.** β-diketone compounds The 1,3 dicarbonylic compounds that may be used are linear or cyclic dicarbonylic compounds. Preference is given to the dicarbonylic compounds of formula (9):

(9)

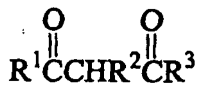

where $R^1$ is $C_1$-$C_{22}$ alkyl, $C_5$-$C_{10}$ hydroxyalkyl, $C_3$-$C_7$ alkenyl, phenyl, phenyl substituted by OH, by $C_1$-$C_4$ alkyl, by $C_1$-$C_4$ halogenalkyl, $C_7$-$C_{10}$ phenylalkyl, $C_5$-$C_{12}$ cycloalkyl, $C_5$-$C_{12}$ cycloalkyl substituted with $C_1$-$C_4$ alkyl, $R^2$ is hydrogen, $C_1$-$C_8$ alkyl, $C_3$-$C_7$ alkenyl, $C_2$-$C_{12}$ phenyl, $C_7$-$C_{12}$ alkylphenyl, $C_7$-$C_{10}$ phenylalkyl, $R^3$ has the same meaning given to $R^1$. Particular preference is given to dibenzoylmethane, to stearoylbenzoylmethane and to dehydroacetic acid.

2. Dihydropyridine (DHP) or polydihydropyridine (polyDHP). The monomeric derivatives of dihydropyridine which may advantageously be used are esters of carboxylic acids whose formula may be generically indicated by:

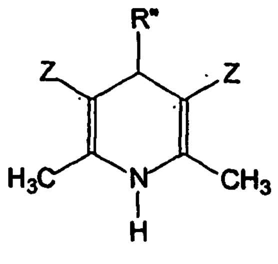

where Z is $CO_2C_2H_5$, $CO_2(n\text{-}C_{12}H_{25})$, R" is hydrogen, or $C_1$-$C_{18}$ alkyl, $C_2$-$C_{18}$ alkoxycarbonyl, or $C_6$-$C_{10}$ aryl. Particular preference is given to 3-bisdodecyloxycarbonyl-2,6-dimethyl-1,4-dihydropyridine, commercially available as Stavinor ® D507, commercialised by Atochem.

Appropriate polydihydropyridines are especially compounds expressed by the following formula:

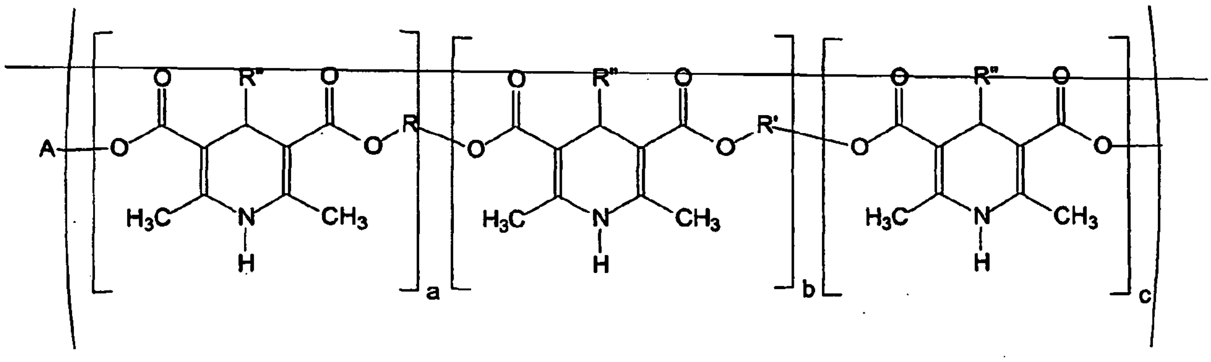

where A is $C_1$-$C_{22}$ alkyl, which may be non-substituted or substituted with $C_1$-$C_{18}$ alkoxy, $C_1$-$C_{18}$ alkylthio, hydroxy, acryloyloxy, metha-acryloyloxy, halogen, phenyl, a and b are numbers from 0 to 20,
c is 0 or 1,
d is a number from 1 to 6, and the conditions d(a+b+c) > 1 and a+b > 0 are satisfied,
R and R' are each independently of the other methylene or phenylene or an alkylene of the type $(—C_rH_{2r}—X—)_sC_rH_{2r}—$,
where r is a number from 2 to 18
s is a number from 0 to 10
X is oxygen or sulphur
R" is hydrogen, or $C_1$-$C_{18}$ alkyl, $C_2$-$C_{18}$ alkoxycarbonyl, or $C_6$-$C_{10}$ aryl. Particular preference is given to thiodiethylene-bis[5-methoxycarbonyl-2,6-dimethyl-1,4-dihydropyridine-3-carboxylate], known commercially as Synesal ® M, produced by Lagor.
**3.** Uracyl derivatives
The uracyl derivatives that may advantageously be used are generically described by the formula (10):

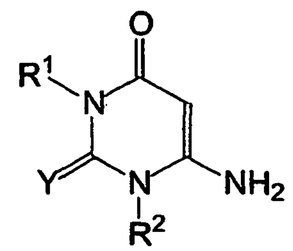

**(10)**

where $R^1$ and $R^2$ are, each independently of the other, hydrogen, $C_1$-$C_{12}$ alkyl, $C_3$-$C_6$ alkenyl, $C_5$-$C_8$ cycloalkyl, either non-substituted or substituted by 1 to 3 $C_1$-$C_4$ alkyl, $C_1$-$C_4$ alkoxy, $C_5$-$C_8$ cycloalkyl or hydroxy or by chlorine atoms, or $C_7$-$C_9$ phenylalkyl, either non-substituted or substituted on the phenol ring by 1 to 3 $C_1$-$C_4$ alkyl, $C_1$-$C_4$ alkoxy, $C_5$-$C_8$ cycloalkyl or hydroxy, or by chlorine atoms; Y may be oxygen or sulphur.

$C_1$-$C_4$ alkyl is for example: methyl, ethyl, n-propyl, isopropyl, n-butyl, iso-butyl, sec-butyl, or ter-butyl.
$C_1$-$C_{12}$ alkyl are, in addition to the radicals mentioned above, for example: pentyl, hexyl, heptyl, octyl, 2-ethylhexyl, isooctyl, nonyl, decyl, undecyl, dodecyl.
$C_1$-$C_4$ alkoxy is for example: methoxy, ethoxy, propoxy, isopropoxy, butoxy, isobutoxy.
$C_5$-$C_8$ cycloalkyl is for example: cyclopentyl, cyclohexyl, cycloheptyl, cyclooctyl.
$C_7$-$C_9$ phenylalkyl is for example: benzyl, 1- or 2-phenylethyl, 3-phenylpropyl, a,a-dimethylbenzyl or 2-phenylisopropyl, preferably benzyl. When the cycloalkyl or phenyl groups of the phenylalkyl radical are substituted, they are then substituted by one or two substituents and preferably by chlorine, hydroxy, methyl or methoxy.
$C_3$-$C_6$ alkenyl is for example: vilyl, allyl, methallyl, 1-butenyl, or 1-hexenyl, preferably allyl.
Preference is given to a compound of formula (10), where $R^1$ and $R^2$ are, each independently of the other,

$C_1$-$C_4$ alkyl and hydrogen; the compound of formula (10) is particularly preferred, where $R^1$ and $R^2$ are methyl.

Also validly used are oligomeric or polymeric derivatives of the compound of formula (10), or compounds of the general formula (11):

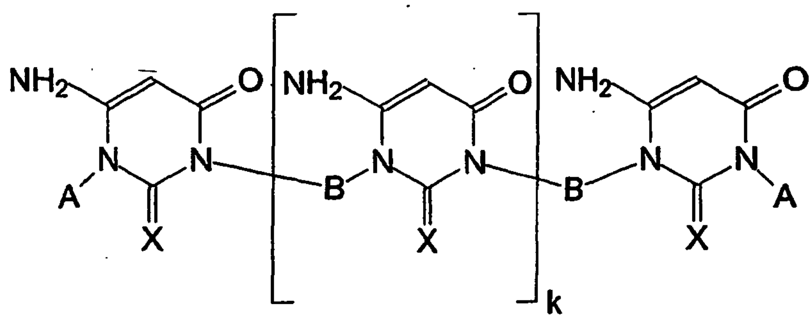

**(11)**

where A is n-octyl, n-octadecyl, oleyl, phenyl, cyclohexyl, or 3-hydroxyphenyl, and B is hexamethylene, 3-methylene-3,5,5,trimethylcyclohexan-1-yl, 4,4'-methylene-bis-cyclohexyl, 4,4'-methylene-bis-phenyl, X is oxygen or, in the case where A is phenyl and B is hexamethylene, is sulphur; k ranges from 0 to 17, preferably from 0 to 2. The oligomeric derivatives described above are to be considered preferred.

*Polyols*

Examples of compounds that may be used to advantage are:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate. Amongst these compounds tris(hydroxyethyl)isocyanurate (THEIC), pentaerythritol, dipentaerythritol, trimethylolpropane, bistrimethylolpropane, sorbitol are considered as preferred.

*Alkaline or alkaline-earth aluminosilicates (zeolites) and hydrotalcites*

*Zeolites*

The zeolites may be described by generic formula (12)

$$M_{q/a}\,[(AlO_2)_q\,(SiO_2)_r]\cdot wH_2O \qquad (12)$$

where a is the charge of the cation M,
M is an element of the first or second principal group, in particular Na, K, Mg, q is a number greater or equal to 2, q:r is a number greater than or equal to 0.4, preferably a number between 0.4 and 10.5, and w is a number between 0 and 300.

The zeolites that may be used in accordance with the invention are described in "Atlas of Zeolite Structure Types", W. M. Meier and D. H. Olson, ed. Butterworths, 3rd Edition, 1992.

Particular preference is given to zeolites whose particle size is predominantly in the range from 0.5 to 10 micron.

The preferred zeolites, which are in themselves known, have an effective mean diameter of the cavity of 3-5 Å and may be prepared using known methods.

Particular preference is given to the zeolites of the NaA type, which have an effective mean diameter of the cavity of 4 Å, and are consequently known as 4A zeolites, indicated by the formula:

$$Na_{12}\,Al_{12}\,Si_{12}\,O_{48}\cdot 27H_2O > \text{A zeolite}$$

Particular preference is given to zeolites, again corresponding to the general formula (12), called X zeolites indicated

by the formula $(Na_2,Ca,Mg)_{29}\ Al_{58}\ Si_{134}\ O_{384}\cdot 240H_2O$ > X zeolite

*Hydrotalcite*s

The hydrotalcites may be described by generic formula (13):

$$[M^{2+}{}_{1-x}M^{3+}{}_{x}(OH)_2]^{x+}[A^{n-}{}_{x/n}mH_2O]^{x-} \qquad (13)$$

where $M^{2+}$ represents at least one divalent metallic cation of the group made up of Mg, Zn, Ni, Ca; $M^{3+}$ represents at least one trivalent metallic cation of the group made up of Al, Fe; $A^{n-}$ is an anion, x and m represent positive numbers that satisfy the following expressions:

$0.2 < x \leq 0.33$
$m>0$

In formula (13), $A^{n-}$ represents an anion having a valence n such that $CO_3^{2-}$, $OH^-$, $HCO_3^-$, $ClO_4^-$, a acetate (-) ion, a salicilate (-) ion, a tartrate (2-) ion and

$[Fe(CN)_6]^{4-}$, $NO_3^-$, $I^-$, 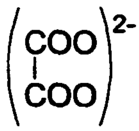

satisfy the condition. Especially preferred are $CO_3^{2-}$, $OH^-$.

The empirical formulas for the natural hydrotalcite and for some synthetic hydrotalcites are:

$Mg_6Al_2(OH)_{16}CO_3.4H_2O$ $\quad$ $Mg_{4,5}Al_2(OH)_{13}CO_3.3.5H_2O$
$Mg_4Al_2(OH)_{12}CO_3.2,85H_2O$ $\quad$ $Mg_{4,35}Al_2(OH)_{11,36}(CO_3)_{1,67}.mH_2O$

Considered preferred among these are:

$Mg_6Al_2(OH)_{16}CO_3.4H_2O$ $\quad$ $Mg_{4,5}Al_2(OH)_{13}CO_3.3.5H_2O$

*Oxides and hydrates of alkaline and alkaline-earth metals*

Examples of compounds that may advantageously be used are:

lithium oxide, sodium oxide, potassium oxide, magnesium oxide, calcium oxide, and lithium hydroxide, sodium hydroxide, potassium hydroxide, magnesium hydroxide, calcium hydroxide.

*Compositions*

The stabilizing compositions referred to above confer excellent properties of thermal stability and stability to light to halogenated resins in plastified formulation, and in particular to polyvinyl chloride in plastified formulation (flexible PVC).

Consequently, a further purpose of the present invention is to obtain a composition for halogenated resins in plastified formulation, in particular flexible PVC, with an excellent thermal stability and stability to light as well as an excellent ability to maintain the initial characteristics at medium temperatures. Such characteristics are significant for the improvement of the resistance to ageing of the products.

Consequently, a further object of the present invention are halogenated resins in plastified formulation, and in particular polyvinyl chloride in plastified formulation (flexible PVC), which comprise the stabilizing compositions referred to above.

The formulations preferred by the present invention regard halogenated resins which comprise the stabilizing compositions referred to above, polyvinyl chloride in plastified formulation (flexible PVC), which comprises the stabilizing compositions, with a content of plastifier of between 5 and 120 parts in weight per 100 parts in weight of PVC, preferentially

between 20 and 70 parts in weight per 100 parts in weight of PVC.

Typical formulations of flexible PVC comprising the stabilizing compositions according to the present invention in general envisage from 0.05 to 1.0 parts in weight, preferentially from 0.1 to 0.5 parts in weight, of hindered amine per 100 parts in weight of PVC; from 0.05 to 1.0 parts in weight, in particular from 0.1 to 0.5 parts in weight, of perchlorate per 100 parts in weight of PVC; from 0.5 to 8.0 parts in weight, in particular from 1.0 to 4.0 parts in weight, of terminal epoxide compound per 100 parts in weight of PVC.

The absence or inadequate amount of one of the components renders insufficient the performance of the stabilizer, worsening both the initial colour and the long-term and medium-term thermal stability. The performance of the stabilizer may be further improved by addition of the components from d) to j). In general, from 0.05 to 1.0 parts in weight, in particular from 0.1 to 0.5 parts in weight, of metallic soap per 100 parts in weight of PVC; from 0.3 to 3.0 parts in weight, in particular from 0.5 to 2.0 parts in weight, of phosphite per 100 parts in weight of PVC; from 0.05 to 0.8 parts in weight, in particular from 0.1 to 0.4 parts in weight, of organic antioxidant per 100 parts in weight of PVC; from 0.05 to 0.8 parts in weight, in particular from 0.1 to 0.4 parts in weight, of organic co-stabilizer per 100 parts in weight of PVC; from 0.05 to 1.0 parts in weight, in particular from 0.1 to 0.3 parts in weight, of polyols per 100 parts in weight of PVC; from 0.1 to 3.0 parts in weight, in particular from 0.3 to 1.0 parts in weight, of hydrotalcites or zeolites per 100 parts in weight of PVC; from 0.05 to 1.0 parts in weight, in particular from 0.1 to 0.3 parts in weight, of oxides or hydrates per 100 parts in weight of PVC.

## Examples

Mixes of flexible PVC having the compositions given in Table 1 were prepared, mixing homogeneously the components, whose amounts are expressed in parts in weight.

Table 1

| Composition of the mixes | |
|---|---|
| PVC K 70[1] | 100 |
| DIDP[2] | 30 |
| stabilizer | a.g.[3] |
| Notes: 1) Evipol SH7020 supplied by EVC 2) diisodecyl phthalate 3) as given in Tables 2, 2'3, 5, 6, 8, 10, 12, 14 | |

The mixes were gelled for 3 minutes at 145°C in a calander.

Static thermal-stability test

Rectangular specimens (1.5x24 cm) were cut from each sheet (whose thickness is 0.3-0.5 mm). The specimens were fixed on the sliding carriage of a Werner-Mathis dynamic oven, termostatted at 180°C, at 190°C or at 200 °C and subjected to heating. The carriage was exiting the oven at a speed of 0.5 cm every 2 minutes at 180°C and 190°C and of 0.4 cm every minute at 200°C. At regular intervals of 15 minutes, the degree of variation of the colour was judged visually. Each assessment was made in accordance with a standard according to the following criterion: 1 = white and transparent, ..., 10 = black (completely degraded). Figure 7 gives the colorimetric scale used for the evaluations. The intermediate scores take into account the possible variations of colour in the range of yellow, red, and green due to partial degradation. The more delayed is the change of colour towards black and the less marked is the initial change of colour from white, the more durable is the colour fastness and better is the stabilizer.

Test for determining thermal stability to Congo red

Thermal stability was also measured along the lines of the method envisaged by the DIN VDE 0472(614) standard, by measuring the time necessary to obtain a colour change of an indicating paper set above a 50-mg specimen taken from each sheet and thermostatted at 180°C.

Ageing-to-light test

Rectangular specimens (6 x 14 cm) were cut from each sheet. The specimens were subjected to accelerated ageing in a Xenon Weather Ometer, according to the conditions specified by the IS04892-2 standard. At successive intervals of 400 hours, the chromatic difference was measured, in the Lab colorimetric space, as a single numerical value expressed by DE.

$$DE = [(DL)^2+(Da)^2+(Db)^2]^{1/2}$$

Where L is the variable luminosity, a and b are the coordinates of chromaticity, and DL, Da, Db are the differences, respectively, of L, a, b between the final state and the initial state at time zero.

Examples

The HALS to which explicit reference is made in the examples are defined as follows:

HALS1: bis(2,2,6,6-tetramethyl-4-piperidyl)sebacate
HALS3: poly[[6-[(1,1,3,3-tetramethylbutyl)amino]-1,3,5-triazin-2,4-diyl]-[(2,2,6,6-tetramethyl-4-piperidyl)imino]hexamethylene[(2,2,6,6-tetramethyl-4-piperidylimino)]]
HALS4: 1,5,8,12-tetrakis[4,6-bis(N-butyl-N-1,2,2,6,6-pentamethyl-4-piperidylamino)-1,3,5-triazin-2-yl]-1,5,8,12-tetraazododecane
HALS8: bis(1,2,2,6,6-tetramethyl-4-piperidyl)sebacate
HALS15: poly[6-morpholino-1,3,5-triazin-2,4-diyl]-[(1,2,2,6,6-pentamethyl-4-piperidyl)imino]hexamethylene[(1,2,2,6,6-pentamethyl-4-piperidyl-imino)].
(*) HALS22: copolymer of N-(tetramethyl-4-piperidinyl)maleimide and $\alpha$-olefin $C_{20}$-$C_{24}$.
(*) HALS44: poly-methyl-propyl-3-oxy-(4(2,2,6,6-tetramethyl)piperidinyl)siloxane
(*) HALS54:1,2,2,6,6 pentamethyl 4 piperidinol
(*) HALS55: 2,2,6,6-tetramethyl-4-piperidinol

(*) not according to the invention

Cl/500, and Cl/510, to which explicit reference is made in the examples, consist in two different organic solutions of sodium perchlorate (sodium perchlorate monohydrate at 46% and 36% of the total, respectively).

*Examples series 1-5 and comparative examples series* 6-23

There were prepared mixes having compositions as indicated in Table 1, which use as stabilizing system the products indicated in Table 2 and Table 3, the amounts of which are expressed in parts in weight per 100 parts in weight of PVC.

Table 2

| **Example** | **1** | **2** | **3** | **4** | **5** |
|---|---|---|---|---|---|
| Epikote 828 | 2 | 2 | 2 | 2 | 2 |
| CL/500 | 0.3 | 0.3 | 0.3 | 0.3 | 0.3 |
| HALS 1 | 0.3 | | | | |
| HALS 3 | | 0.3 | | | |
| HALS 4 | | | 0.3 | | |
| HALS 8 | | | | 0.3 | |
| HALS 15 | | | | | 0.3 |

Table 3

| Example | 6 | 7 | 8 | 9 | 10 | 11 | 12 | 13 | 14 |
|---|---|---|---|---|---|---|---|---|---|
| Epikote 828 | 2 | | | 2 | | 2 | | | 2y |
| CL/500 | | 0.3 | | 0.3 | 0.3 | | | 0.3y | |
| HALS 1 | | | 0.3 | | 0.3 | 0.3 | | | |
| HALS 3 | | | | | | | 0.3 | 0.3 | 0.3y |
| HALS 4 | | | | | | | | | |
| HALS 8 | | | | | | | | | |
| HALS 15 | | | | | | | | | |
| **Example** | **15** | **16** | **17** | **18** | **19** | **20** | **21** | **22** | **23** |
| Epikote 828 | | | 2 | | | 2 | | | 2 |
| CL/500 | | 0.3 | | | 0.3 | | | 0.3 | |
| HALS 1 | | | | | | | | | |
| HALS 3 | | | | | | | | | |
| HALS 4 | 0.3 | 0.3 | 0.3 | | | | | | |
| HALS 8 | | | | 0.3 | 0.3 | 0.3 | | | |
| HALS 15 | | | | | | | 0.3 | 0.3 | 0.3 |

NOT FURNISHED UPON FILING

Given the considerable efficacy of the system, thermal-stability tests were carried out on the mixes of the examples 1-5 at 190°C. Table 4 bis shows the results obtained:

Table 4 bis

| | | 0 min | 15 min | 30 min | 45 min | 60 min | 75 min | 90 min |
|---|---|---|---|---|---|---|---|---|
| 1 | 180°C | 1 | 2 | 3 | 4 | 5 | 5 | 5 |
| | 190°C | 1 | 3 | 4 | 5 | 7 | 10 | 10 |
| 2 | 180°C | 1 | 2 | 2 | 3 | 3 | 3 | 3 |
| | 190°C | 1 | 2 | 3 | 4 | 4 | 5 | 6 |
| 3 | 180°C | 1 | 2 | 3 | 4 | 4 | 4 | 4 |
| | 190°C | 1 | 2 | 4 | 5 | 5 | 6 | 8 |
| 4 | 180°C | 1 | 1 | 2 | 3 | 4 | 4 | 4 |
| | 190°C | 1 | 3 | 3 | 4 | 5 | 7 | 10 |
| 5 | 180°C | 1 | 1 | 2 | 3 | 3 | 4 | 4 |
| | 190°C | 1 | 2 | 4 | 4 | 5 | 7 | 10 |

*Examples series 1'-8'*(*)

There were prepared mixes having compositions as indicated in Table 1, which use as stabilizing system the products indicated in table 2', whose amounts are expressed in parts in weight per 100 parts in weight of PVC.

Table 2'

| Example | 1' | 2' | 3' | 4' | 5' | 6' | 7' | 8' |
|---|---|---|---|---|---|---|---|---|
| Epikote 828 | 2 | 2 | 2 | 2 | 2 | 2 | 2 | 2 |
| CL/510 | 0,45 | 0,45 | 0,45 | 0,45 | 0,45 | 0,45 | 0,45 | 0,45 |
| HALS 22 | 0,3 | 0,6 | | | | | | |
| HALS 44 | | | 0,3 | 0,6 | | | | |
| HALS 54 | | | | | 0,3 | 0,6 | | |
| HALS 55 | | | | | | | 0,3 | 0,6 |

(*) not according to the present invention

The samples are subjected to the static stability test at 200°C, thermal stability to Congo Red at 180°C, obtaining the results shown in table 3':

Table 3'

| Example | CR | 0 min | 10 min | 20 min | 30 min | 40 min | 50 min |
|---|---|---|---|---|---|---|---|
| 1' | 105 | 1 | 2 | 3 | 4 | 5 | 9 |
| 2' | 180 | 1 | 2 | 3 | 4 | 4 | 5 |
| 3' | 150 | 1 | 2 | 3 | 4 | 4 | 5 |
| 4' | 200 | 1 | 2 | 3 | 4 | 4 | 7 |
| 5' | 150 | 1 | 2 | 3 | 5 | 8 | 10 |
| 6' | 180 | 1 | 1 | 3 | 4 | 7 | 10 |
| 7' | 105 | 1 | 2 | 3 | 5 | 10 | 10 |
| 8' | 125 | 1 | 2 | 3 | 5 | 9 | 10 |

A further increase in temperature in the static stability test, performed at 200°C, allows to highlight the efficacy of the system both in relation to the initial colour and coluor fastness in time.

*Examples series 24-28 and comparative examples series 29-46*(*)

With the formulations given, mixes were prepared having compositions as indicated in Table 1, which use, as stabilizing system, the products indicated in Table 5 and Table 6, where it is used, as source of perchlorates, potassium perchlorate, and whose amounts are expressed in parts in weight per 100 parts in weight of PVC.

Table 5

| **Example** | **24** | **25** | **26** | **27** | **28** |
|---|---|---|---|---|---|
| Epikote 828 | 2 | 2 | 2 | 2 | 2 |
| $KClO_4$ | 0.15 | 0.15 | 0.15 | 0.15 | 0.15 |
| HALS 1 | 0.3 | | | | |
| HALS 3 | | 0.3 | | | |
| HALS 4 | | | 0.3 | | |
| HALS 8 | | | | 0.3 | |
| HALS 15 | | | | | 0.3 |

(*) not according to the present invention

Table 6

| **Example** | **29** | **30** | **31** | **32** | **33** | **34** | **35** | **36** | **37** |
|---|---|---|---|---|---|---|---|---|---|
| Epikote 828 | 2 | | | 2 | | 2 | | | 2 |
| $KClO_4$ | | 0.15 | | 0.15 | 0.15 | | | 0.15 | |
| HALS 1 | | | 0.3 | | 0.3 | 0.3 | | | |
| HALS 3 | | | | | | | 0.3 | 0.3 | 0.3 |
| HALS 4 | | | | | | | | | |
| HALS 8 | | | | | | | | | |
| HALS 15 | | | | | | | | | |
| **Example** | **38** | **39** | **40** | **41** | **42** | **43** | **44** | **45** | **46** |
| Epikote 828 | | | 2 | | | 2 | | | 2 |
| $KClO_5$ | | 0.15 | | | 0.15 | | | 0.15 | |
| HALS 1 | | | | | | | | | |
| HALS 3 | | | | | | | | | |

(continued)

| Example | 38 | 39 | 40 | 41 | 42 | 43 | 44 | 45 | 46 |
|---|---|---|---|---|---|---|---|---|---|
| HALS 4 | 0.3 | 0.3 | 0.3 | | | | | | |
| HALS 8 | | | | 0.3 | 0.3 | 0.3 | | | |
| HALS 15 | | | | | | | 0.3 | 0.3 | 0.3 |

The specimens were subjected to the static-stability test at 180°C (Figure 2), and to the test of thermal stability to Congo red (CR), once again at 180°C, obtaining the results shown in Table 7:

Table7

| Example | CR | 0 min | 15 min | 30 min | 45 min | 60 min | 75 min | 90 min |
|---|---|---|---|---|---|---|---|---|
| 29 | 22 | 2 | 3 | 4 | 4 | 6 | 6 | 8 |
| 30 | 5 | 1 | 2 | 4 | 4 | 4 | 4 | 5 |
| 31 | 9 | 1 | 9 | 10 | 10 | 10 | 10 | 10 |
| 32 | 16 | 1 | 2 | 4 | 4 | 4 | 4 | 5 |
| 33 | 9 | 1 | 9 | 10 | 10 | 10 | 10 | 10 |
| 34 | 100 | 1 | 2 | 4 | 4 | 5 | 6 | 7 |
| **24** | **115** | **1** | **3** | **4** | **4** | **5** | **5** | **6** |
| 35 | 18 | 1 | 3 | 9 | 10 | 10 | 10 | 10 |
| 36 | 14 | 1 | 3 | 10 | 10 | 10 | 10 | 10 |
| 37 | 72 | 1 | 3 | 7 | 8 | 9 | 9 | 10 |
| **25** | **110** | **1** | **3** | **4** | **5** | **7** | **9** | **10** |
| 38 | 9 | 1 | 9 | 10 | 10 | 10 | 10 | 10 |
| 39 | 10 | 1 | 3 | 10 | 10 | 10 | 10 | 10 |
| 40 | 62 | 1 | 3 | 7 | 8 | 9 | 10 | 10 |
| **26** | **80** | **1** | **2** | **4** | **5** | **7** | **8** | **10** |
| 41 | 10 | 1 | 9 | 10 | 10 | 10 | 10 | 10 |
| 42 | 10 | 1 | 9 | 10 | 10 | 10 | 10 | 10 |
| 43 | 75 | 1 | 2 | 3 | 4 | 5 | 7 | 8 |
| **27** | **98** | **1** | **2** | **3** | **4** | **4** | **5** | **7** |
| 44 | 5 | 1 | 10 | 10 | 10 | 10 | 10 | 10 |
| 45 | 4 | 1 | 10 | 10 | 10 | 10 | 10 | 10 |
| 46 | 25 | 1 | 3 | 9 | 10 | 10 | 10 | 10 |
| **28** | **30** | **1** | **3** | **9** | **10** | **10** | **10** | **10** |

Also in this case, the validity of the stabilizing system is evident. In fact, the mixes containing the stabilizing composition of the present invention (mixes 24-28) show a colour fastness and a final stability that are better than those presented by stabilizing systems with just one or two components (mixes 29-46).

*Examples series 47-66*

With the formulations given, mixes were prepared having compositions as indicated in Table 1, which use as stabilizing system the products indicated in Table 8, whose amounts are expressed in parts in weight per 100 parts in weight of PVC.

Table 8

| Example | 47 | 48 | 49 | 50 | 51 | 52 | 53 | 54 | 55 | 56 |
|---|---|---|---|---|---|---|---|---|---|---|
| Epikote 828 | 2 | 2 | 2 | 2 | 2 | 2 | 2 | 2 | 2 | 2 |
| CU500 | 0.1 | 0.6 | 0.1 | 0.6 | 0.1 | 0.6 | 0.1 | 0.6 | 0.1 | 0.6 |
| HALS 1 | 0.1 | 0.1 | 0.6 | 0.6 | | | | | | |
| HALS 3 | | | | | 0 1 | 0 1 | 0.6 | 0.6 | | |

(continued)

| **Example** | **47** | **48** | **49** | **50** | **51** | **52** | **53** | **54** | **55** | **56** |
|---|---|---|---|---|---|---|---|---|---|---|
| HALS 4 | | | | | | | | | 0.1 | 0.1 |
| HALS 8 | | | | | | | | | | |
| HALS 15 | | | | | | | | | | |

| **Example** | **57** | **58** | **59** | **60** | **61** | **62** | **63** | **64** | **65** | **66** |
|---|---|---|---|---|---|---|---|---|---|---|
| Epikote 828 | 2 | 2 | 2 | 2 | 2 | 2 | 2 | 2 | 2 | 2 |
| CU500 | 0.1 | 0.6 | 0.1 | 0.6 | 0.1 | 0.6 | 0.1 | 0.6 | 0.1 | 0.6 |
| HALS 1 | | | | | | | | | | |
| HALS 3 | | | | | | | | | | |
| HALS 4 | 0.6 | 0.6 | | | | | | | | |
| HALS 8 | | | 0.1 | 0.1 | 0.6 | 0.6 | | | | |
| HALS 15 | | | | | | | 0.1 | 0.1 | 0.6 | 0.6 |

In order to be observe a significant degradation, the thermal-stability test had to be conducted at 190°C (Figures 3 and 4), and the results appearing in Table 9 were obtained.

Table 9

| Example | CR | 0 min | 15 min | 30 min | 45 min | 60 min | 75 min | 90 min |
|---|---|---|---|---|---|---|---|---|
| 1 | 115 | 1 | 2 | 4 | 5 | 5 | 8 | 10 |
| 47 | 110 | 1 | 2 | 4 | 5 | 5 | 8 | 10 |
| 48 | 41 | 1 | 2 | 4 | 10 | 10 | 10 | 10 |
| 49 | 130 | 1 | 2 | 4 | 5 | 7 | 10 | 10 |
| 50 | 138 | 1 | 2 | 4 | 4 | 5 | 8 | 10 |
| 2 | 170 | 1 | 2 | 3 | 3 | 4 | 5 | 6 |
| 51 | 135 | 1 | 2 | 3 | 4 | 4 | 5 | 7 |
| 52 | 47 | 1 | 2 | 4 | 8 | 10 | 10 | 10 |
| 53 | 175 | 1 | 2 | 3 | 4 | 4 | 5 | 9 |
| 54 | 197 | 1 | 2 | 2 | 3 | 3 | 5 | 6 |
| 3 | 122 | 1 | 2 | 4 | 5 | 5 | 7 | 10 |
| 55 | 65 | 1 | 3 | 4 | 5 | 7 | 9 | 10 |
| 56 | 45 | 1 | 2 | 4 | 10 | 10 | 10 | 10 |
| 57 | 152 | 1 | 2 | 3 | 4 | 5 | 9 | 10 |
| 58 | 162 | 1 | 2 | 3 | 4 | 4 | 5 | 6 |
| 4 | 75 | 1 | 2 | 3 | 5 | 9 | 10 | 10 |
| 59 | 107 | 1 | 2 | 3 | 4 | 5 | 7 | 10 |
| 60 | 47 | 1 | 2 | 4 | 10 | 10 | 10 | 10 |
| 61 | 150 | 1 | 2 | 3 | 3 | 5 | 10 | 10 |
| 62 | 127 | 1 | 2 | 3 | 5 | 7 | 10 | 10 |
| 5 | 135 | 1 | 2 | 3 | 4 | 5 | 7 | 10 |
| 63 | 115 | 1 | 2 | 4 | 4 | 5 | 7 | 10 |
| 64 | 50 | 1 | 2 | 4 | 9 | 10 | 10 | 10 |
| 65 | 140 | 1 | 2 | 3 | 3 | 5 | 8 | 10 |
| 66 | 180 | 1 | 2 | 2 | 3 | 4 | 5 | 7 |

It may be noted that, also in the formulations that are poorer in the essential components of the stabilizer of the present invention, the initial colour remains excellent and that there are ample possibilities of identifying the most efficacious formulation according to the application envisaged.

*Examples series 67-86*

With the formulations given, mixes were prepared having compositions as indicated in Table 1, which use as stabilizing system the products indicated in Table 10, the amounts of which are expressed in parts in weight per 100 parts in weight of PVC.

Table 10

| **Example** | **67** | **68** | **69** | **70** | **71** | **72** | **73** | **74** | **75** | **76** |
|---|---|---|---|---|---|---|---|---|---|---|
| Epikote 828 | 2 | 2 | 2 | 2 | 2 | 2 | 2 | 2 | 2 | 2 |
| CU500 | 0.3 | 0.3 | 0.3 | 0.3 | 0.3 | | | | | |
| AD2/Na[1] | | | | | | 0.6 | 0.6 | 0.6 | 0.6 | 0.6 |
| HALS 1 | 0.3 | | | | | 0.3 | | | | |
| HALS 3 | | 0.3 | | | | | 0.3 | | | |
| HALS 4 | | | 0.3 | | | | | 0.3 | | |
| HALS 8 | | | | 0.3 | | | | | 0.3 | |
| HALS 15 | | | | | 0.3 | | | | | 0.3 |
| **Example** | **77** | **78** | **79** | **80** | **81** | **82** | **83** | **84** | **85** | **86** |
| Epikote 828 | 2 | 2 | 2 | 2 | 2 | 2 | 2 | 2 | 2 | 2 |
| AD2/Ca[2] | 0.6 | 0.6 | 0.6 | 0.6 | 0.6 | | | | | |
| AD2/Mg[3] | | | | | | 0.6 | 0.6 | 0.6 | 0.6 | 0.6 |
| HALS 1 | 0.3 | | | | | 0.3 | | | | |
| HALS 3 | | 0.3 | | | | | 0.3 | | | |
| HALS 4 | | | 0.3 | | | | | 0.3 | | |
| HALS 8 | | | | 0.3 | | | | | 0.3 | |
| HALS 15 | | | | | 0.3 | | | | | 0.3 |

1) Sodium perchlorate supported on silicates (25% $NaClO_4$)
2) Calcium perchlorate supported on silicates (25% $CaClO_4$)
3) Magnesium perchlorate supported on silicates (25% $MgClO_4$)

In order to observe a significant degradation, the thermal-stability test had to be conducted at 190°C (Figure 5), and the results obtained are shown in Table 11.

The mixes containing the stabilizing composition forming the object of the present invention (mixes 67-86) manifest excellent colour fastness and final stability.

Table 11

| Example | CR | 0 min | 15 min | 30 min | 45 min | 60 min | 75 min | 90 min |
|---|---|---|---|---|---|---|---|---|
| 67 | 112 | 1 | 3 | 4 | 5 | 7 | 10 | 10 |
| 72 | 131 | 1 | 2 | 3 | 4 | 5 | 9 | 10 |
| 77 | 147 | 1 | 3 | 3 | 3 | 3 | 6 | 10 |
| 82 | 132 | 1 | 3 | 3 | 3 | 3 | 6 | 10 |
| 68 | 130 | 1 | 2 | 3 | 4 | 4 | 5 | 6 |
| 73 | 185 | 1 | 2 | 3 | 4 | 4 | 6 | 7 |
| 78 | 201 | 1 | 2 | 3 | 3 | 3 | 3 | 4 |
| 83 | 179 | 1 | 2 | 3 | 3 | 3 | 3 | 4 |
| 69 | 98 | 1 | 2 | 4 | 5 | 5 | 6 | 8 |
| 74 | 138 | 1 | 2 | 3 | 4 | 5 | 5 | 6 |
| 79 | 210 | 1 | 2 | 3 | 3 | 3 | 4 | 5 |
| 84 | 167 | 1 | 2 | 3 | 4 | 4 | 5 | 6 |
| 70 | 160 | 1 | 3 | 3 | 4 | 5 | 7 | 10 |
| 75 | 145 | 1 | 2 | 3 | 4 | 5 | 7 | 10 |
| 80 | 177 | 1 | 2 | 2 | 3 | 3 | 4 | 7 |
| 85 | 118 | 1 | 3 | 3 | 4 | 5 | 6 | 10 |

(continued)

| Example | CR | 0 min | 15 min | 30 min | 45 min | 60 min | 75 min | 90 min |
|---|---|---|---|---|---|---|---|---|
| 71 | 106 | 1 | 2 | 4 | 4 | 5 | 7 | 10 |
| 76 | 187 | 1 | 2 | 3 | 3 | 4 | 7 | 10 |
| 81 | 193 | 1 | 2 | 3 | 3 | 4 | 4 | 5 |
| 86 | 155 | 1 | 2 | 3 | 3 | 4 | 4 | 5 |

The mixes containing the stabilizing composition forming the object of the present invention (mixes 67-86) manifest excellent colour fastness and final stability.

As can be inferred from Table 11, also the use of perchlorates on a solid support is advantageous.

*Examples series 87-108*

With the formulations given, mixes were prepared having compositions as indicated in table 1, which use as stabilizing system the products indicated in Table 12, whose amounts are expressed in parts in weight per 100 parts in weight of PVC.

Table 12

| **Example** | **87** | **88** | **89** | **90** | **91** | **92** | **93** | **94** | **95** | **96** | **97** | **98** |
|---|---|---|---|---|---|---|---|---|---|---|---|---|
| Araldit PT910 | 2 | 2 | 2 | 2 | 2 | | | 2 | 2 | 2 | 2 | 2 |
| Araldit PT810 | | | | | | 2 | 2 | | | | | |
| CL/500 | 0.3 | 0.3 | 0.3 | 0.3 | 0.3 | 0.3 | 0.3 | | | | | |
| AD2/Na[1] | | | | | | | | 0.6 | 0.6 | 0.6 | 0.6 | 0.6 |
| HALS 1 | 0.3 | | | | | | | 0.3 | | | | |
| HALS 3 | | 0.3 | | | | | | | 0.3 | | | |
| HALS 4 | | | 0.3 | | | | | | | 0.3 | | |
| HALS 8 | | | | 0.3 | | 0.3 | | | | | 0.3 | |
| HALS 15 | | | | | 0.3 | | 0.3 | | | | | 0.3 |
| **Example** | **99** | **100** | **101** | **102** | **103** | **104** | **105** | **106** | **107** | **108** | | |
| Araldit PT910 | 2 | 2 | 2 | 2 | 2 | 2 | 2 | 2 | 2 | 2 | | |
| AD2/Ca[2] | 0.6 | 0.6 | 0.6 | 0.6 | 0.6 | | | | | | | |
| AD2/Mg[3] | | | | | | 0.6 | 0.6 | 0.6 | 0.6 | 0.6 | | |
| HALS 1 | 0.3 | | | | | 0.3 | | | | | | |
| HALS 3 | | 0.3 | | | | | 0.3 | | | | | |
| HALS 4 | | | 0.3 | | | | | 0.3 | | | | |
| HALS 8 | | | | 0.3 | | | | | 0.3 | | | |
| HALS 15 | | | | | 0.3 | | | | | 0.3 | | |

1) Sodium perchlorate supported on silicates (25% $NaClO_4$)
2) Calcium perchlorate supported on silicates (25% $CaClO_4$)
3) Magnesium perchlorate supported on silicates (25% $MgClO_4$)

Also in this case, the thermal-stability test was conducted at 190°C (Figure 6 shows the results obtained with the examples 87-93), and the results appear in Table 13;

Table 13

| Example | CR | 0 min | 15 min | 30 min | 45 min | 60 min | 75 min | 90 min |
|---|---|---|---|---|---|---|---|---|
| 87 | 150 | 1 | 2 | 3 | 4 | 6 | 8 | 10 |
| 88 | 175 | 1 | 2 | 3 | 3 | 4 | 6 | 8 |
| 89 | 185 | 1 | 2 | 3 | 3 | 4 | 6 | 8 |
| 90 | 150 | 1 | 2 | 3 | 3 | 5 | 8 | 10 |
| 91 | 190 | 1 | 2 | 3 | 3 | 4 | 6 | 8 |

(continued)

| Example | CR | 0 min | 15 min | 30 min | 45 min | 60 min | 75 min | 90 min |
|---|---|---|---|---|---|---|---|---|
| 92 | 205 | 1 | 2 | 3 | 3 | 4 | 4 | 7 |
| 93 | 190 | 1 | 2 | 3 | 4 | 4 | 5 | 6 |
| 94 | 155 | 1 | 2 | 3 | 4 | 5 | 7 | 9 |
| 95 | 205 | 1 | 2 | 3 | 3 | 4 | 5 | 6 |
| 96 | 200 | 1 | 2 | 3 | 3 | 4 | 5 | 7 |
| 97 | 190 | 1 | 2 | 3 | 3 | 4 | 6 | 8 |
| 98 | 215 | 1 | 2 | 3 | 4 | 4 | 5 | 7 |
| 99 | 152 | 1 | 2 | 3 | 4 | 5 | 8 | 10 |
| 100 | 215 | 1 | 2 | 3 | 3 | 4 | 5 | 7 |
| 101 | 210 | 1 | 2 | 3 | 3 | 4 | 5 | 7 |
| 102 | 190 | 1 | 2 | 3 | 3 | 4 | 5 | 8 |
| 103 | 215 | 1 | 2 | 3 | 3 | 4 | 5 | 7 |
| 104 | 130 | 1 | 2 | 3 | 4 | 7 | 9 | 10 |
| 105 | 175 | 1 | 2 | 3 | 3 | 4 | 6 | 7 |
| 106 | 170 | 1 | 2 | 3 | 3 | 4 | 7 | 8 |
| 107 | 120 | 1 | 2 | 3 | 3 | 4 | 7 | 10 |
| 108 | 155 | 1 | 2 | 3 | 3 | 4 | 5 | 7 |

As the preferred epoxide compound and the preferred perchlorate vary, the results as regards initial colour, thermal stability, and colour fastness are decidedly positive and in line with the results previously obtained, with all the HALS considered.

*Examples series 109-118 and comparative series 119-132*

Mixes having a composition as indicated in Table 1 are prepared, having as a stabilising system the products indicated in Table 14 and 15, whose amounts are expressed as parts in weight per 100 parts in weight of PVC.

Table 14

| **Example** | **109** | **110** | **111** | **112** | **113** | **114** | **115** | **116** | **117** | **118** |
|---|---|---|---|---|---|---|---|---|---|---|
| Epikote 828 | 2 | 2 | 2 | 2 | 2 | 2 | 2 | 2 | 2 | 2 |
| CL/510 | 0,45 | 0,45 | 0,45 | 0,45 | 0,45 | 0,45 | 0,45 | 0,45 | 0,45 | 0,45 |
| HALS 1 | | 0,3 | | | | | | | | |
| HALS 3 | | | | | | | | | 0,3 | 0,3 |
| HALS 4 | | | | 0,3 | | | | | | |
| HALS 8 | | | | | 0,3 | | | | | |
| HALS 15 | 0,3 | | | | | 0,3 | | 0,3 | | |
| HALS 22 (*) | | | 0,3 | | | | | | | |
| HALS 44 (*) | | | | | | | 0,3 | | | |
| (*) not according to the present invention | | | | | | | | | | |

Table 15

| **Example** | **118** | **119** | **120** | **121** | **122** | **123** | **124** |
|---|---|---|---|---|---|---|---|
| Epikote 828 | 2 | 2 | 2 | 2 | 2 | 2 | 2 |
| CU510 | 0,45 | 0,45 | 0,45 | 0,45 | 0,45 | 0,45 | 0,45 |
| Zn Laurato | 0,5 | | | | | | |
| Ca Stearato | | 0,5 | | | | | |
| Ca Laurato | | | 0,5 | | | | |
| Chel 210[1] | | | | 1 | | | |

(continued)

| Example | 118 | 119 | 120 | 121 | 122 | 123 | 124 |
|---|---|---|---|---|---|---|---|
| Chel 294[2] | | | | | 1 | | |
| Irganox 1010[3] | | | | | | 0,2 | |
| Rhodiastab 83[4] | | | | | | | 0,2 |
| HALS 1 | | 0,3 | | | | | |
| HALS 4 | | | | 0,3 | 0,3 | | |
| HALS 8 | | | | | | 0,3 | |
| HALS 15 | 0,3 | | | | | | 0,3 |
| HALS 22 not according to the present invention | | | 0,3 | | | | |
| **Example** | **125** | **126** | **127** | **128** | **129** | **130** | **131** |
| Epikote 828 | 2 | 2 | 2 | 2 | 2 | 2 | 2 |
| CU510 | 0,45 | 0,45 | 0,45 | 0,45 | 0,45 | 0,45 | 0,45 |
| Stavinor 507[5] | 0,2 | | | | | | |
| 1,3dimetil-6-ammino uracile | | 0,2 | | | | | |
| THEIC | | | 0,3 | | | | |
| di-PTE[6] | | | | 0,3 | | | |
| Zeolite A | | | | | 0,5 | | |
| $Ca(OH)_2$ | | | | | | 0,5 | |
| $Mg(OH)_2$ | | | | | | | 0,5 |
| HALS 3 | | | | | 0,3 | 0,3 | 0,3 |
| HALS 15 | | | 0,3 | 0,3 | | | |
| HALS 44 (*) | 0,3 | 0,3 | | | | | |

1) diphenylisodecylphosphiteReagens
2)aryl alkyl phosphite
3) supplied by Ciba
4) supplied by Rhodia
5) supplied by Atochem
6) of pentaerithrite
(*) not according to the present invention

Table 16 shows that by using compounds belonging to the above cited classes of non-essential components a synergic effect is obtained: the initial colour, the static stability at 200°C and the Congo Red value at 180°C are in fact further improved.

## Claims

**1.** A composition comprising:

a) a hindered amine of a polyalkylpiperidine type, containing at least one structural unit of formula (1):

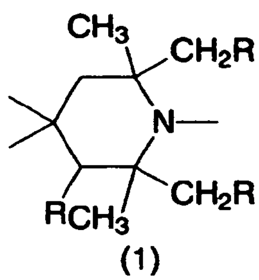

(1)

chosen from the group consisting of:

bis(1,2,2,6,6-pentamethyl-4-piperidyl)sebacate,
bis(2,2,6,6-tetramethyl-4.-piperidyl)sebacate,
poly [6- morpholino- 1,3,5- triazin- 2,4- diyl]-[(1,2,2,6,6- pentamethyl- 4- piperidyl) imino] hexamethylene[(1,2,2,6,6 pentamethyl-4-piperidyl-imino)] where the number of repetitive units ranges from 2 to 20,
1,5,8,12-tetrakis[4,6-bis(N-butyl-N-1,2,2,6,6-pentamethyl-4-piperidylamino)-1,3,5-triazin-2-yl]-1,5,8,12-tetraazododecane,
poly[[6-[(1,1,3,3-tetramethylbutyl)amino]-1,3,5-triazin-2,4-diyl]-[(2,2,6,6-tetramethyl-4-piperidyl)imino]hexamethylene[(2,2,6,6-tetramethyl-4-piperidylimino)]], where the number of repetitive units ranges from 2 to 20;

b) a perchlorate of formula M(ClO4)n chosen from the group consisting of: sodium perchlorate, magnesium perchlorate, calcium perchlorate; and
c) a terminal epoxide compound.

2. Composition according to Claim 1, in which the terminal epoxide compound c) contains at least one epoxide radical of formula (5):

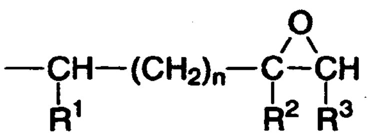

(5)

where R1 and R3 are both hydrogen, R2 is hydrogen or methyl, and n is equal to 0, or where R1 and R3 are together -CH2-CH2- or -CH2-CH2-CH2-, R2 is hydrogen, and n is 0 or 1, and this epoxide is bound directly to carbon, oxygen, nitrogen, or sulphur atoms.

3. Composition according to Claim 2, in which the terminal epoxide compound is chosen from the group consisting of: liquid and solid diglycidyl ethers of bisphenol A; liquid diglycidyl ethers of bisphenol F; liquid terephthalate, trimellitate glycidyl ethers of carboxylic acids and solid heterocyclic epoxy resins.

4. Composition according to Claim 3, in which the terminal epoxide compound is chosen from the group consisting of: liquid diglycidyl ethers of A bisphenol; epoxy resins of heterocycles, such as triglycidylisocyanurate, and the glycidyl ether of terephthalate and trimellitate.

5. A composition according to Claim 1, which comprises, in addition to a sterically hindered amine, a perchlorate and a terminal epoxide compound, at least one compound chosen from the group consisting of: d) metallic soaps, e) organic phosphites, f) antioxidants, g) organic co-stabilizers (β-diketones and dihydropyridines or polydihydropyridines and uracyl derivatives), h) polyalcohols, i) zeolites and hydrotalcites, j) hydrates and oxides of alkaline and alkaline-earth metals.

6. A composition according to Claim 1, which comprises from 0.05 to 1.0 parts in weight, preferably from 0.1 to 0.5 parts in weight, of hindered amine per 100 parts in weight of PVC; from 0.05 to 1.0 parts in weight, preferably from 0.1 to 0.5 parts in weight, of perchlorate per 100 parts in weight of PVC; from 0.5 to 8.0 parts in weight, preferably from 1.0 to 4.0 parts in weight, of terminal epoxide compound per 100 parts in weight of PVC.

7. A composition according to Claim 6, which further comprises at least one compound chosen from the group consisting of: from 0.05 to 1.0 parts in weight preferably from 0.1 to 0.5 parts in weight, of metallic soap per 100 parts in weight of PVC; from 0.3 to 3.0 parts in weight, preferably from 0.5 to 2.0 parts in weight, of phosphite per 100 parts in weight of PVC; from 0.05 to 0.8 parts in weight, preferably from 0.1 to 0.4 parts in weight, of organic antioxidant per 100 parts in weight of PVC; from 0.05 to 0.8 parts in weight, preferably from 0.1 to 0.4 parts in weight, of organic co-stabilizer per 100 parts in weight of PVC; from 0.05 to 1.0 parts in weight, preferably from 0.1 to 0.3 parts in weight, of polyols per 100 parts in weight of PVC; from 0.1 to 3.0 parts in weight, preferably from 0.3 to 1.0 parts in weight, of hydrotalcites or zeolites per 100 parts in weight of PVC; from 0.05 to 1.0 parts in weight, preferably from

0.1 to 0.3 parts in weight, of oxides or hydrates of alkaline or alkaline-earth metals per 100 parts in weight of PVC.

**8.** Halogenated resins in plastified formulation comprising the composition according to Claim 1.

**9.** Polyvinyl chloride in plastified formulation (flexible PVC), comprising the composition according to Claim 1.

**10.** A flexible PVC according to Claim 9, which comprises from 0.05 to 1.0 parts in weight, preferaby from 0.1 to 0.5 parts in weight, of hindered amine per 100 parts in weight of PVC; from 0.05 to 1.0 parts in weight, preferably from 0.1 to 0.5 parts in weight, of perchlorate per 100 parts in weight of PVC; from 0.5 to 8.0 parts in weight, preferably from 1.0 to 4.0 parts in weight, of terminal epoxide compound per 100 parts in weight of PVC.

**11.** The flexible PVC according to Claim 10, which further comprises at least one compound chosen from the group consisting of: from 0.05 to 1.0 parts in weight, preferably from 0.1 to 0.5 parts in weight, of metallic soap per 100 parts in weight of PVC; from 0.3 to 3.0 parts in weight, preferably from 0.5 to 2.0 parts in weight, of phosphite per 100 parts in weight of PVC; from 0.05 to 0.8 parts in weight, preferably from 0.1 to 0.4 parts in weight, of organic antioxidant per 100 parts in weight of PVC; from 0.05 to 0.8 parts in weight, preferably from 0.1 to 0.4 parts in weight, of organic co-stabilizer per 100 parts in weight of PVC; from 0.05 to 1.0 parts in weight, preferably from 0.1 to 0.3 parts in weight, of polyols per 100 parts in weight of PVC; from 0.1 to 3.0 parts in weight, preferably from 0.3 to 1.0 parts in weight, of hydrotalcites or zeolites per 100 parts in weight of PVC; from 0.05 to 1.0 parts in weight, preferably from 0.1 to 0.3 parts in weight, of oxides or hydrates of alkaline or alkaline-earth metals per 100 parts in weight of PVC.

**12.** The flexible PVC according to Claim 9, in which the content of plastifier is between 5 and 120 parts in weight per 100 parts in weight of PVC, preferably between 20 and 70 parts in weight per 100 parts in weight of PVC.

**Patentansprüche**

**1.** Zusammensetzung, umfassend:

a) ein sterisch gehindertes Amin vom Polyalkylpiperidin-Typ, enthaltend mindestens eine strukturelle Einheit mit der Formel (1):

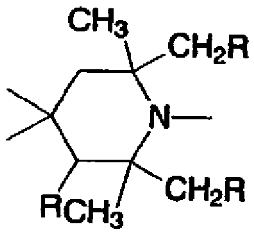

(1)

ausgewählt wird aus der Gruppe bestehend aus:

Bis(1,2,2,6,6-pentamethyl-4-piperidyl)sebacat,
Bis(2,2,6,6-tetramethyl-4-piperidyl)sebacat,
Poly [6- morpholino- 1,3,5- triazin- 2,4- diyl]-[(1,2,2,6,6- pentamethyl- 4- piperidyl) imino] hexamethylen[(1,2,2,6,6-pentamethyl-4-piperidyl-imino)], wobei die Anzahl an sich wiederholenden Einheiten in einem Bereich von 2 bis 20 liegt,
1,5,8,12-Tetrakis[4,6-bis(N-butyl-N-1,2,2,6,6-pentamethyl-4-piperidylamino)-1,3,5-triazin-2-yl]-1,5,8,12-tetraazododecan,
Poly[[6-[(1,1,3,3-tetramethylbutyl)amino]-1,3,5-triazin-2,4-diyl]-[(2,2,6,6-tetramethyl-4-pipe ridyl)imino]hexamethylen[(22,66-tetramethyl-4-piperidyl-imino)]], wobei die Anzahl an sich wiederholenden Einheiten in einem Bereich von 2 bis 20 liegt,

b) ein Perchlorat der Formel $M(ClO_4)_n$, ausgewählt aus der Gruppe bestehend aus: Natriumperchlorat, Magnesiumperchlorat, Calciumperchlorat; und
c) eine terminale Epoxidverbindung.

**2.** Zusammensetzung gemäß Anspruch 1, in welcher die terminale Epoxidverbindung c) mindestens einen Epoxidrest der Formel (5) enthält:

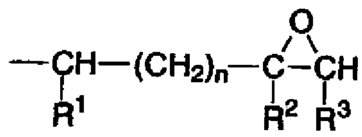

(5)

in welcher R1 und R3 beide Wasserstoff sind, R2 Wasserstoff oder Methyl ist, und n gleich 0 ist, oder in welcher R1 und R3 zusammen -CH2-CH2- oder -CH2-CH2-CH2- sind, R2 Wasserstoff ist, und n 0 oder 1 ist, und dieses Epoxid direkt an Kohlenstoff-, Sauerstoff-, Stickstoff- oder Schwefelatome gebunden ist.

**3.** Zusammensetzung gemäß Anspruch 2, in welcher das terminale Epoxid ausgewählt wird aus der Gruppe bestehend aus: flüssigen und festen Diglycidylethern von Bisphenol A; flüssigen Diglycidylethern von Bisphenol F; flüssigem Terephthalat, Trimellitat-Glycidylethern von Carbonsäuren und festen heterocyclischen Epoxidharzen.

**4.** Zusammensetzung gemäß Anspruch 3, in welcher das terminale Epoxid ausgewählt wird aus der Gruppe bestehend aus: flüssigen Diglycidylethern von Bisphenol A; Epoxidharzen von Heterocyclen wie Triglycidylisocyanurat, und den Glycidylethern von Terephthalat und Trimellitat.

**5.** Zusammensetzung gemäß Anspruch 1, welche zusätzlich zu einem sterisch gehinderten Amin, einem Perchlorat und einer terminalen Epoxidverbindung mindestens eine Verbindung enthält, ausgewählt aus der Gruppe bestehend aus: d) Metallseifen, e) organischen Phosphiten, f) Antioxidantien, g) organischen Co-Stabilisierungsmitteln (β-Diketonen und Dihydropyridinen oder Polydihydropyridinen und Uracilderivaten), h) Polyalkoholen, i) Zeolithen und Hydrotalkiten, j) Hydraten und Oxiden von Alkali- und Erdalkalimetallen.

**6.** Zusammensetzung gemäß Anspruch 1, die zwischen 0,05 bis 1,0 Gewichtsteile, vorzugsweise zwischen 0,1 und 0,5 Gewichtsteile an sterisch gehindertem Amin pro 100 Gewichtsteilen PVC, zwischen 0,05 und 1,0 Gewichtsteile, vorzugsweise zwischen 0,1 bis 0,5 Gewichtsteile Perchlorat pro 100 Gewichtsteilen PVC; zwischen 0,5 und 8,0 Gewichtsteile, vorzugsweise zwischen 1,0 bis 4,0 Gewichtsteile terminaler Epoxidverbindung pro 100 Gewichtsteilen PVC umfasst.

**7.** Zusammensetzung gemäß Anspruch 6, welche weiterhin mindestens eine Verbindung umfasst, ausgewählt aus der Gruppe bestehend aus: zwischen 0,05 bis 1,0 Gewichtsteile, vorzugsweise zwischen 0,1 bis 0,5 Gewichtsteile Metallseife pro 100 Gewichtsteilen PVC; zwischen 0,3 bis 3,0 Gewichtsteile, vorzugsweise zwischen 0,5 bis 2,0 Gewichtsteile Phosphit pro 100 Gewichtsteilen PVC; zwischen 0,05 bis 0,8 Gewichtsteile, vorzugsweise zwischen 0,1 bis 0,4 Gewichtsteile organische Antioxidantien pro 100 Gewichtsteilen PVC; zwischen 0,05 bis 0,8 Gewichtsteile, vorzugsweise zwischen 0,1 bis 0,4 Gewichtsteile organisches Co-Stabilisierungsmittel pro 100 Gewichtsteilen PVC; zwischen 0,05 bis 1,0 Gewichtsteile, vorzugsweise zwischen 0,1 bis 0,3 Gewichtsteile Polyole pro 100 Gewichtsteilen PVC; zwischen 0,1 bis 3,0 Gewichtsteile, vorzugsweise zwischen 0,3 bis 1,0 Gewichtsteile Hydrotalkite oder Zeolithe pro 100 Gewichtsteilen PVC; zwischen 0,05 bis 1,0 Gewichtsteile, vorzugsweise zwischen 0,1 bis 0,3 Gewichtsteile Oxide oder Hydrate von Alkali- oder Erdalkalimetallen pro 100 Gewichtsteilen PVC.

**8.** Halogenierte Harze in Formulierungen mit Weichmachern, umfassend die Zusammensetzung gemäß Anspruch 1.

**9.** Polyvinylchlorid in Formulierungen mit Weichmachern (flexibles PVC), umfassend die Zusammensetzung gemäß Anspruch 1.

**10.** Flexibles PVC gemäß Anspruch 9, das zwischen 0,05 bis 1,0 Gewichtsteile, vorzugsweise zwischen 0,1 und 0,5 Gewichtsteile an sterisch gehindertem Amin pro 100 Gewichtsteilen PVC, zwischen 0,05 und 1,0 Gewichtsteile, vorzugsweise zwischen 0,1 bis 0,5 Gewichtsteile Perchlorat pro 100 Gewichtsteilen PVC; zwischen 0,5 und 8,0 Gewichtsteile, vorzugsweise zwischen 1,0 bis 4,0 Gewichtsteile terminaler Epoxidverbindung pro 100 Gewichtsteilen PVC umfasst.

**11.** Flexibles PVC gemäß Anspruch 10, welches weiterhin mindestens eine Verbindung umfasst, ausgewählt aus der Gruppe bestehend aus: zwischen 0,05 bis 1,0 Gewichtsteile, vorzugsweise zwischen 0,1 bis 0,5 Gewichtsteile Metallseife pro 100 Gewichtsteilen PVC; zwischen 0,3 bis 3,0 Gewichtsteile, vorzugsweise zwischen 0,5 bis 2,0 Gewichtsteile Phosphit pro 100 Gewichtsteilen PVC; zwischen 0,05 bis 0,8 Gewichtsteile, vorzugsweise zwischen 0,1 bis 0,4 Gewichtsteile organische Antioxidantien pro 100 Gewichtsteilen PVC; zwischen 0,05 bis 0,8 Gewichtsteile, vorzugsweise zwischen 0,1 bis 0,4 Gewichtsteile organisches Co-Stabilisierungsmittel pro 100 Gewichtsteilen PVC; zwischen 0,05 bis 1,0 Gewichtsteile, vorzugsweise zwischen 0,1 bis 0,3 Gewichtsteile Polyole pro 100 Gewichtsteilen PVC; zwischen 0,1 bis 3,0 Gewichtsteile, vorzugsweise zwischen 0,3 bis 1,0 Gewichtsteile Hydrotalkite oder Zeolithe pro 100 Gewichtsteilen PVC; zwischen 0,05 bis 1,0 Gewichtsteile, vorzugsweise zwischen 0,1 bis 0,3 Gewichtsteile Oxide oder Hydrate von Alkali- oder Erdalkalimetallen pro 100 Gewichtsteilen PVC.

**12.** Flexibles PVC gemäß Anspruch 9, in welchem der Gehalt an Weichmacher zwischen 5 und 120 Gewichtsteilen pro 100 Gewichtsteilen PVC, vorzugsweise zwischen 20 und 70 Gewichtsteilen pro 100 Gewichtsteilen PVC beträgt.

**Revendications**

**1.** Composition comprenant :

(a) une amine encombrée d'un type polyalkylpipéridine, contenant au moins une unité structurale de formule (1) :

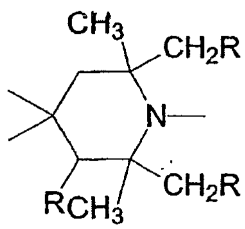

(1)

choisie dans le groupe consistant en :

sébacate de bis(1,2,2,6,6-pentaméthyl-4-pipéridyl),
sébacate de bis(2,2,6,6-tétraméthyl-4-pipéridyl),
poly [6- morpholino- 1,3,5- triazin- 2,4- diyl]-[(1,2,2,6,6- pentaméthyl- 4- pipéridyl) imino] hexaméthylène[(1,2,2,6,6-pentaméthyl-4-pipéridylimino)] où le nombre d'unités répétées est compris dans la gamme de 2 à 20,
1,5,8,12-tétrakis[4,6-bis(N-butyl-N-1,2,2,6,6-pentaméthyl-4-pipéridylamino)-1,3,5-triazin-2-yl]-1,5,8,12-tétraazododécane, poly[[6-[(1,1,3,3-tétraméthylbutyl)amino]-1,3,5-triazin-2,4-diyl]-[(2,2,6,6-tétraméthyl-4-pipéridyl)imino]hexaméthylène [(2,2,6,6-tétraméthyl-4-pipéridyl)imino)]] où le nombre d'unités répétées est compris dans la gamme de 2 à 20 ;

(b) un perchlorate de formule $M(ClO_4)_n$ est choisi dans le groupe consistant en : perchlorate de sodium, perchlorate de magnésium, perchlorate de calcium ; et
(c) un composé époxyde terminal.

**2.** Compositions selon la revendication 1, dans lesquelles le composé époxyde terminal (c) contient au moins un radical époxyde de formule (5) :

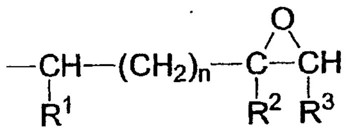

(5)

dans laquelle $R^1$ et $R^3$ sont tous les deux un atome d'hydrogène, $R^2$ est un atome d'hydrogène ou un groupe méthyle et n est égal à 0, ou bien lorsque $R^1$ et $R^3$ sont ensemble un groupe $-CH_2-CH_2-$ ou - $CH_2-CH_2-CH_2-$, $R^2$ est un atome d'hydrogène et n est 0 ou 1, et cet époxyde est lié directement aux atomes de carbone, d'oxygène, d'azote ou de soufre.

**3.** Compositions selon la revendication 2, dans lesquelles le composé époxyde terminal est choisi dans le groupe consistant en : éthers diglycidyliques liquides ou solides du bisphénol A ; éthers diglycidyliques liquides du bisphénol F ; éthers glycidyliques liquides de trimellitate et de téréphtalate d'acides carboxyliques et résines époxy hétérocycliques solides.

**4.** Compositions selon la revendication 3, dans lesquelles le composé époxyde terminal est choisi dans le groupe consistant en : éthers diglycidyliques liquides du bisphénol A ; résines époxy d'hétérocycles comme le triglycidylisocyanurate, et l'éther glycidylique de téréphtalate et de trimellitate.

**5.** Composition selon la revendication 1, qui comprend, en plus d'une amine encombrée stériquement, d'un perchlorate et d'un composé époxyde terminal, au moins un composé choisi dans le groupe consistant en : (d) savons métalliques, (e) phosphites organiques, (f) antioxydants, (g) co-stabilisants organiques (β-dicétones et dihydropyridines ou polydihydropyridines et dérivés uracyles), (h) polyalcools, (i) zéolites et hydrotalcites, (j) hydrates et oxydes de métaux alcalins et alcalino-terreux.

**6.** Composition selon la revendication 1, qui comprend de 0,05 à 1,0 partie en poids, de préférence de 0,1 à 0,5 partie en poids d'amine encombrée pour 100 parties en poids de PVC ; de 0,05 à 1,0 partie en poids, de préférence de 0,1 à 0,5 partie en poids de perchlorate pour 100 parties en poids de PVC ; de 0,5 à 8,0 parties en poids, de préférence de 1,0 à 4,0 parties en poids de composé époxyde terminal pour 100 parties en poids de PVC.

**7.** Composition selon la revendication 6, qui comprend de plus au moins un composé choisi dans le groupe consistant en : de 0,05 à 1,0 partie en poids, de préférence de 0,1 à 0,5 partie en poids de savon métallique pour 100 parties en poids de PVC ; de 0,3 à 3,0 parties en poids, de préférence de 0,5 à 2,0 parties en poids de phosphite pour 100 parties en poids de PVC ; de 0,05 à 0,8 partie en poids, de préférence de 0,1 à 0,4 partie en poids d'antioxydant organique pour 100 parties en poids de PVC ; de 0,05 à 0,8 partie en poids, de préférence de 0,1 à 0,4 partie en poids de co-stabilisant organique pour 100 parties en poids de PVC ; de 0,05 à 1,0 partie en poids, de préférence de 0,1 à 0,3 partie en poids de polyols pour 100 parties en poids de PVC ; de 0,1 à 3,0 parties en poids, de préférence de 0,3 à 1,0 partie en poids d'hydrotalcites ou de zéolites pour 100 parties en poids de PVC ; de 0,05 à 1,0 partie en poids, de préférence de 0,1 à 0,3 partie en poids d'oxydes ou d'hydrates de métaux alcalins ou alcalino-terreux pour 100 parties en poids de PVC.

**8.** Résines halogénées dans une formulation plastifiée comprenant la composition selon la revendication 1.

**9.** Chlorure de polyvinyle dans une formulation plastifiée (PVC souple) comprenant la composition selon la revendication 1.

**10.** PVC souple selon la revendication 9, qui comprend de 0,05 à 1,0 partie en poids, de préférence de 0,1 à 0,5 partie en poids d'amine encombrée pour 100 parties en poids de PVC ; de 0,05 à 1,0 partie en poids, de préférence de 0,1 à 0,5 partie en poids de perchlorate pour 100 parties en poids de PVC ; de 0,5 à 8,0 parties en poids, de préférence de 1,0 à 4,0 parties en poids de composé époxyde terminal pour 100 parties en poids de PVC.

**11.** PVC souple selon la revendication 10, qui comprend de plus au moins un composé choisi dans le groupe consistant en : de 0,05 à 1,0 partie en poids, de préférence de 0,1 à 0,5 partie en poids de savon métallique pour 100 parties

en poids de PVC ; de 0,3 à 3,0 parties en poids, de préférence de 0,5 à 2,0 parties en poids de phosphite pour 100 parties en poids de PVC ; de 0,05 à 0,8 partie en poids, de préférence de 0,1 à 0,4 partie en poids d'antioxydant organique pour 100 parties en poids de PVC ; de 0,05 à 0,8 partie en poids, de préférence de 0,1 à 0,4 partie en poids de co-stabilisant organique pour 100 parties en poids de PVC ; de 0,05 à 1,0 partie en poids, de préférence de 0,1 à 0,3 partie en poids de polyols pour 100 parties en poids de PVC ; de 0,1 à 3,0 parties en poids, de préférence de 0,3 à 1,0 partie en poids d'hydrotalcites ou de zéolites pour 100 parties en poids de PVC ; de 0,05 à 1,0 partie en poids, de préférence de 0,1 à 0,3 partie en poids d'oxydes ou d'hydrates de métaux alcalins ou alcalino-terreux pour 100 parties en poids de PVC.

**12.** PVC souple selon la revendication 9, dans lequel la teneur en plastifiant est comprise entre 5 et 120 parties en poids pour 100 parties en poids de PVC, de préférence entre 20 et 70 parties en poids pour 100 parties en poids de PVC.

Fig 1

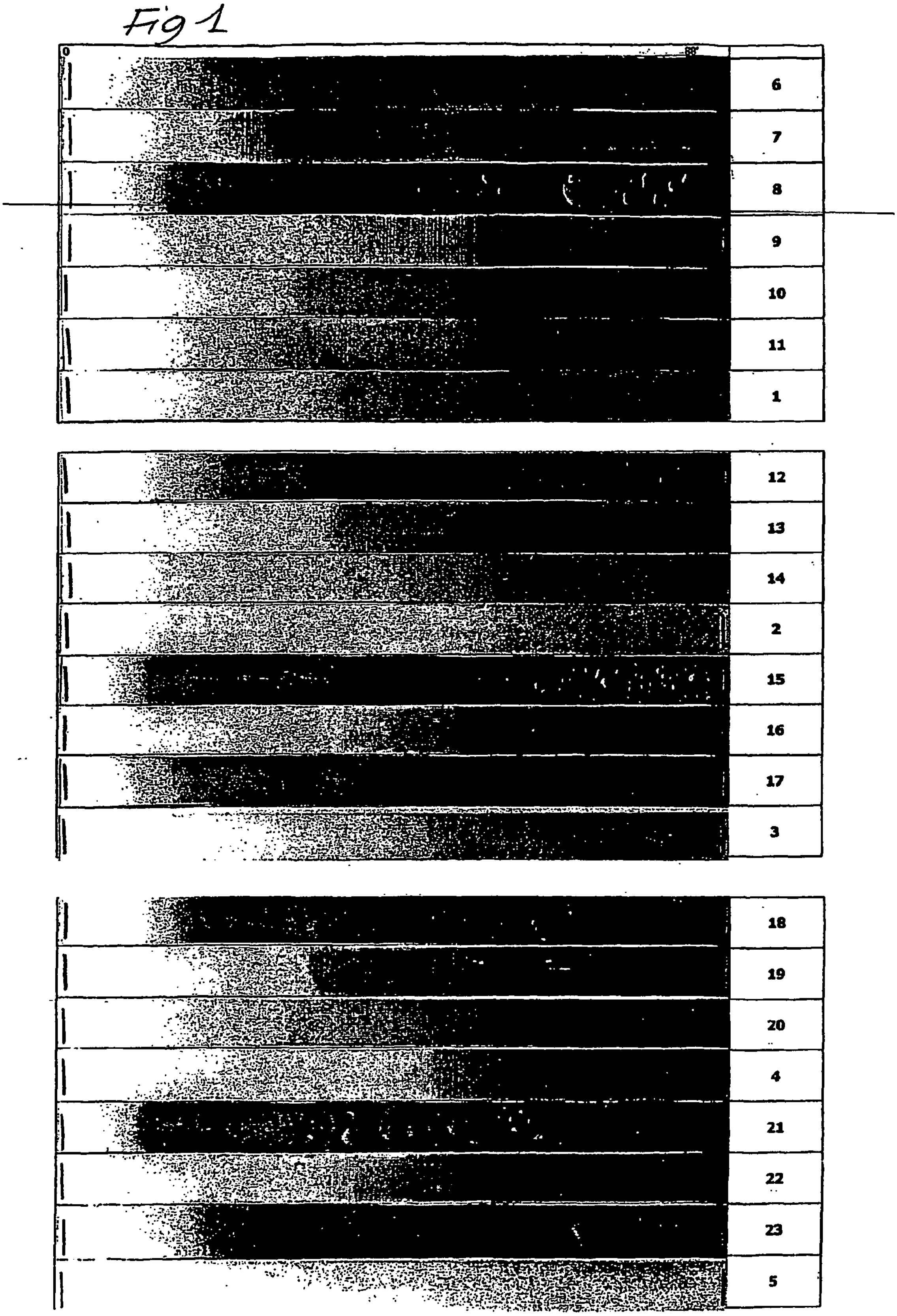

Fig. 2

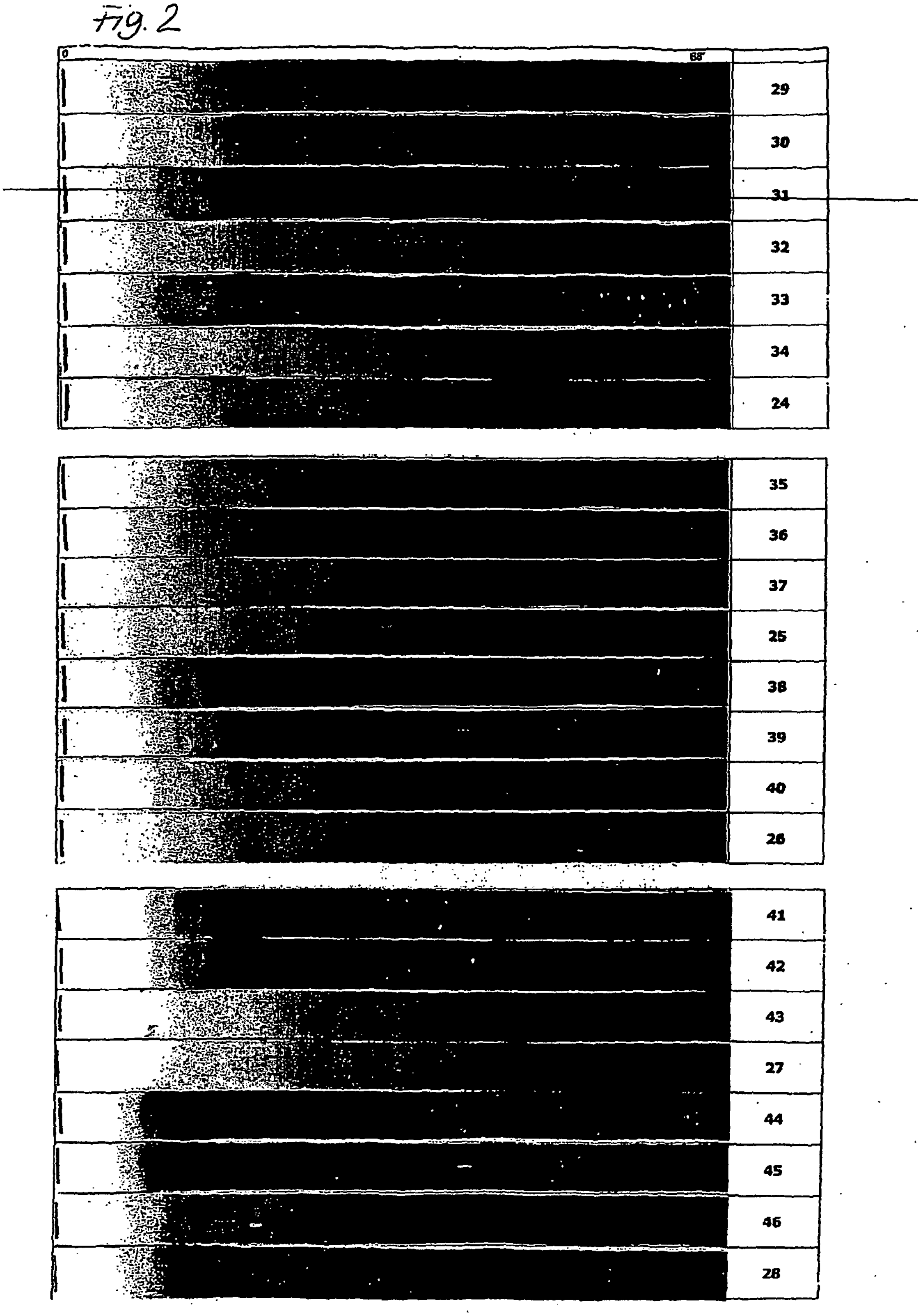

Fig. 3

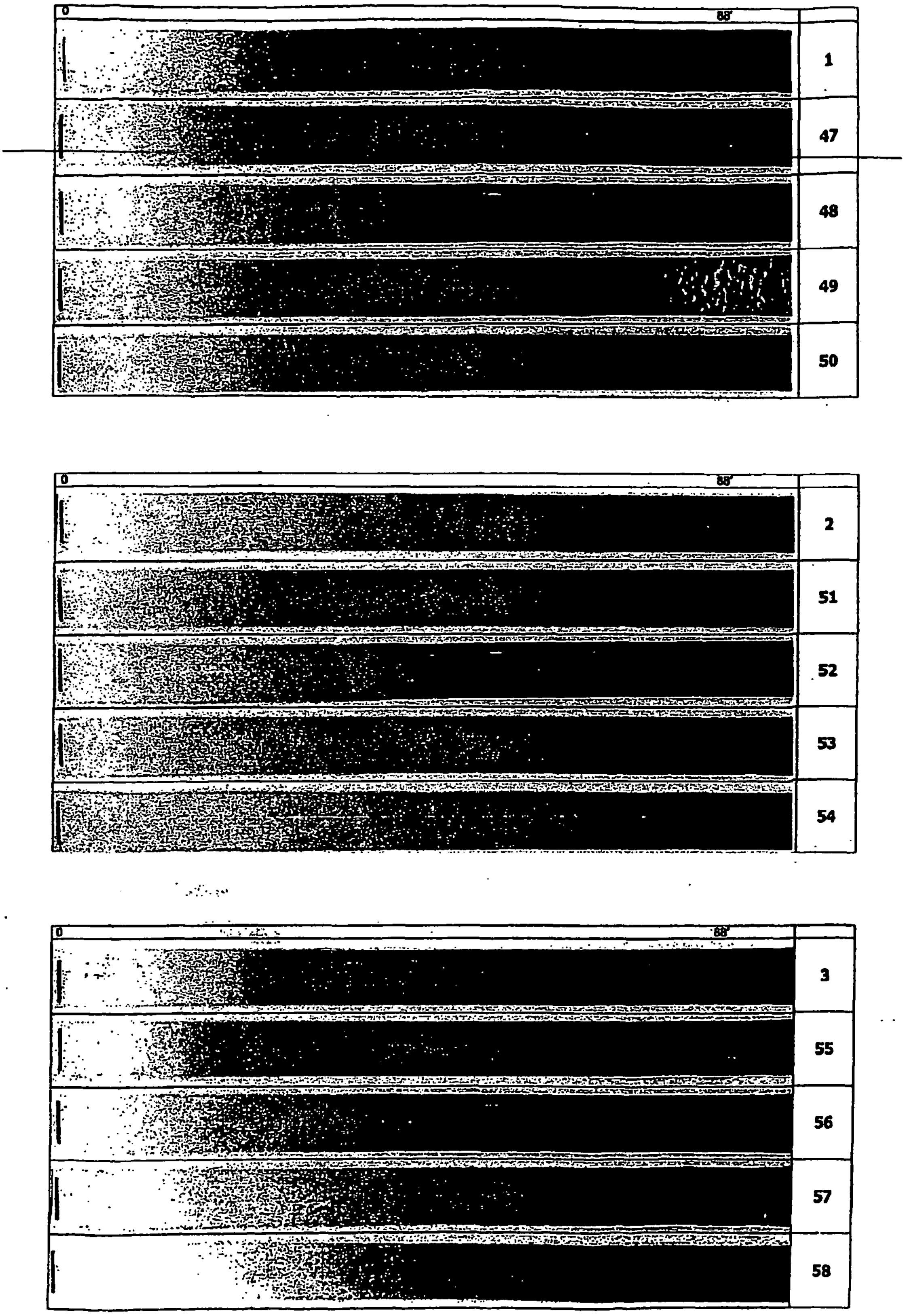

Fig. 4

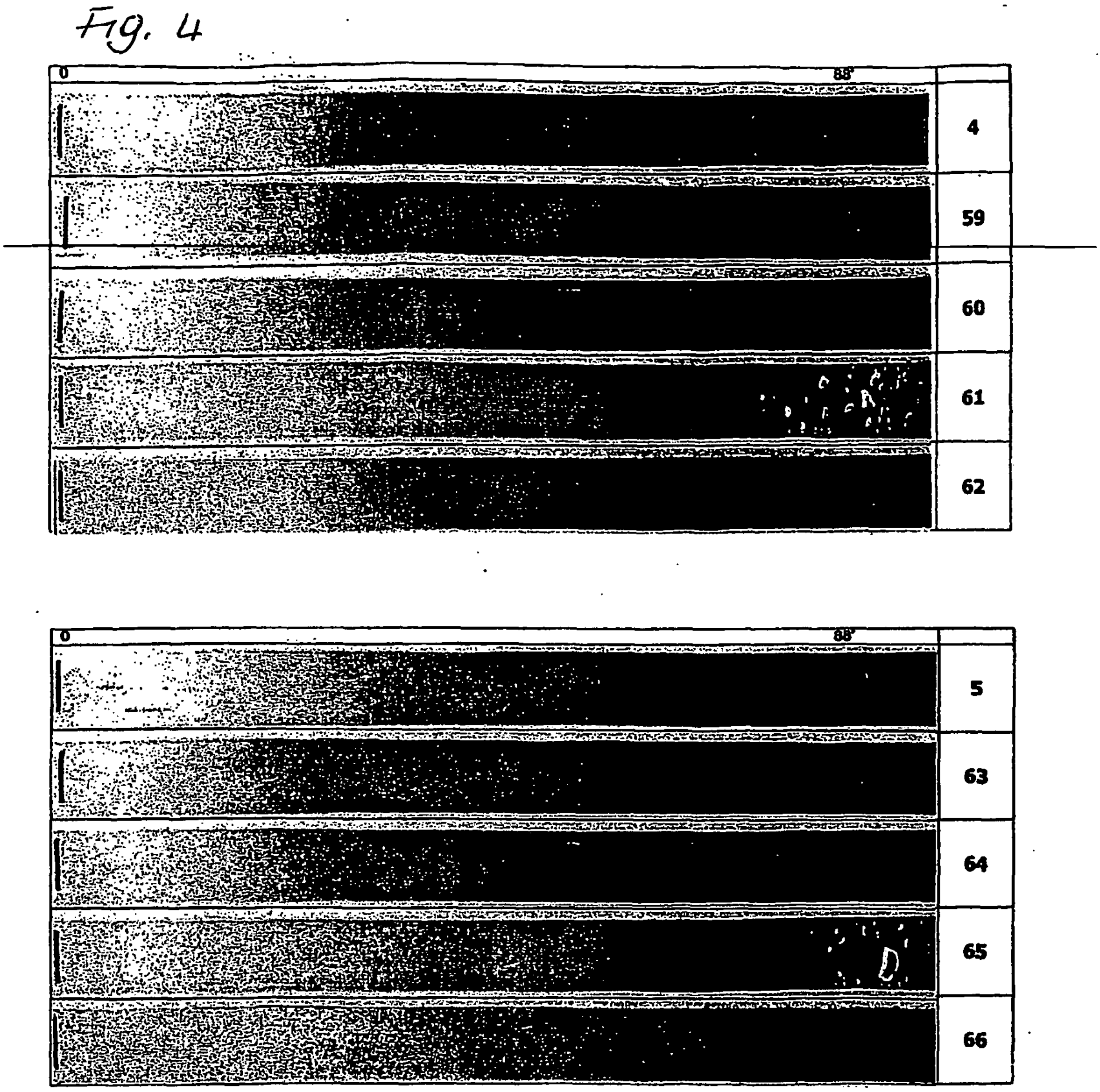

Fig. 5

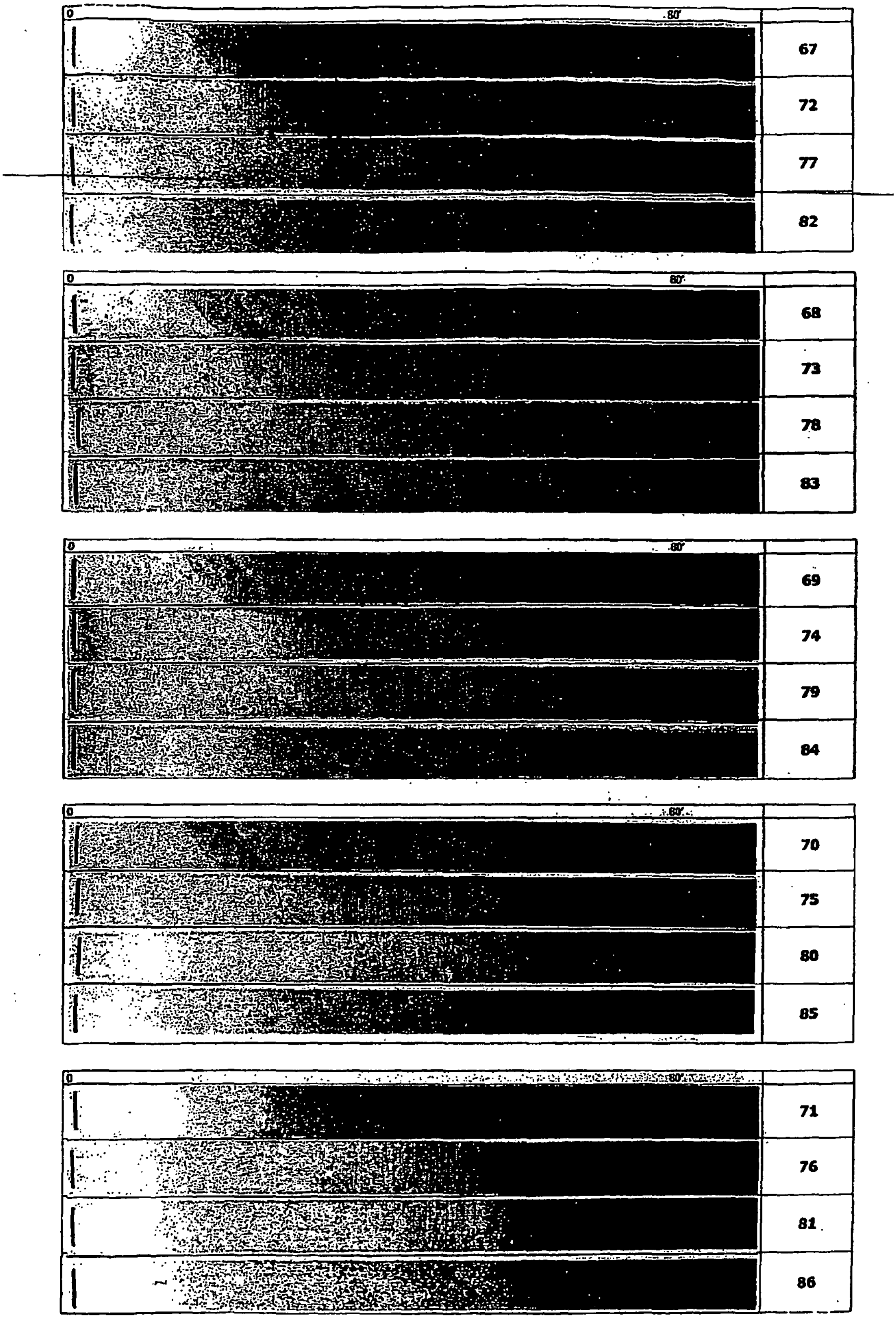
0
80'
67
72
77
82
0
80'
68
73
78
83
0
80'
69
74
79
84
0
80'
70
75
80
85
0
80'
71
76
81
86

Fig. 6

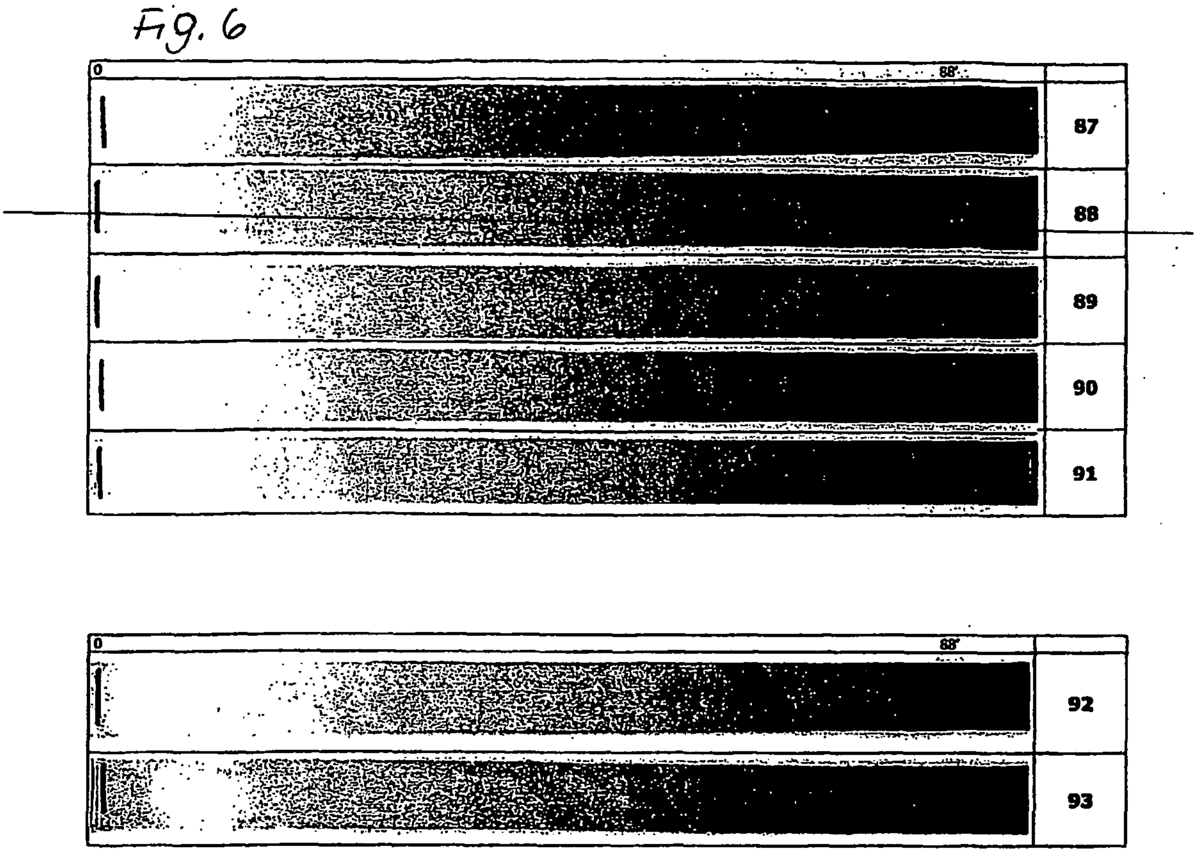

Fig. 7

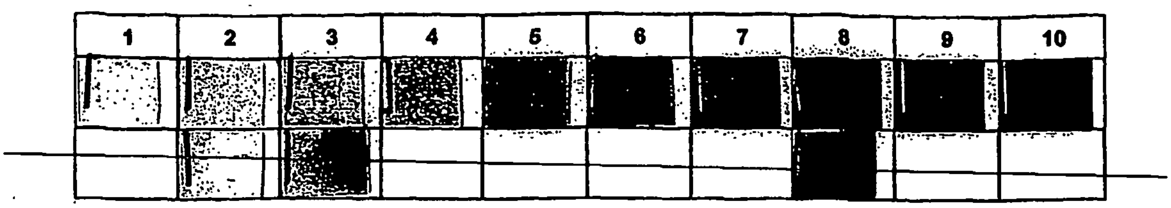

Figure 8

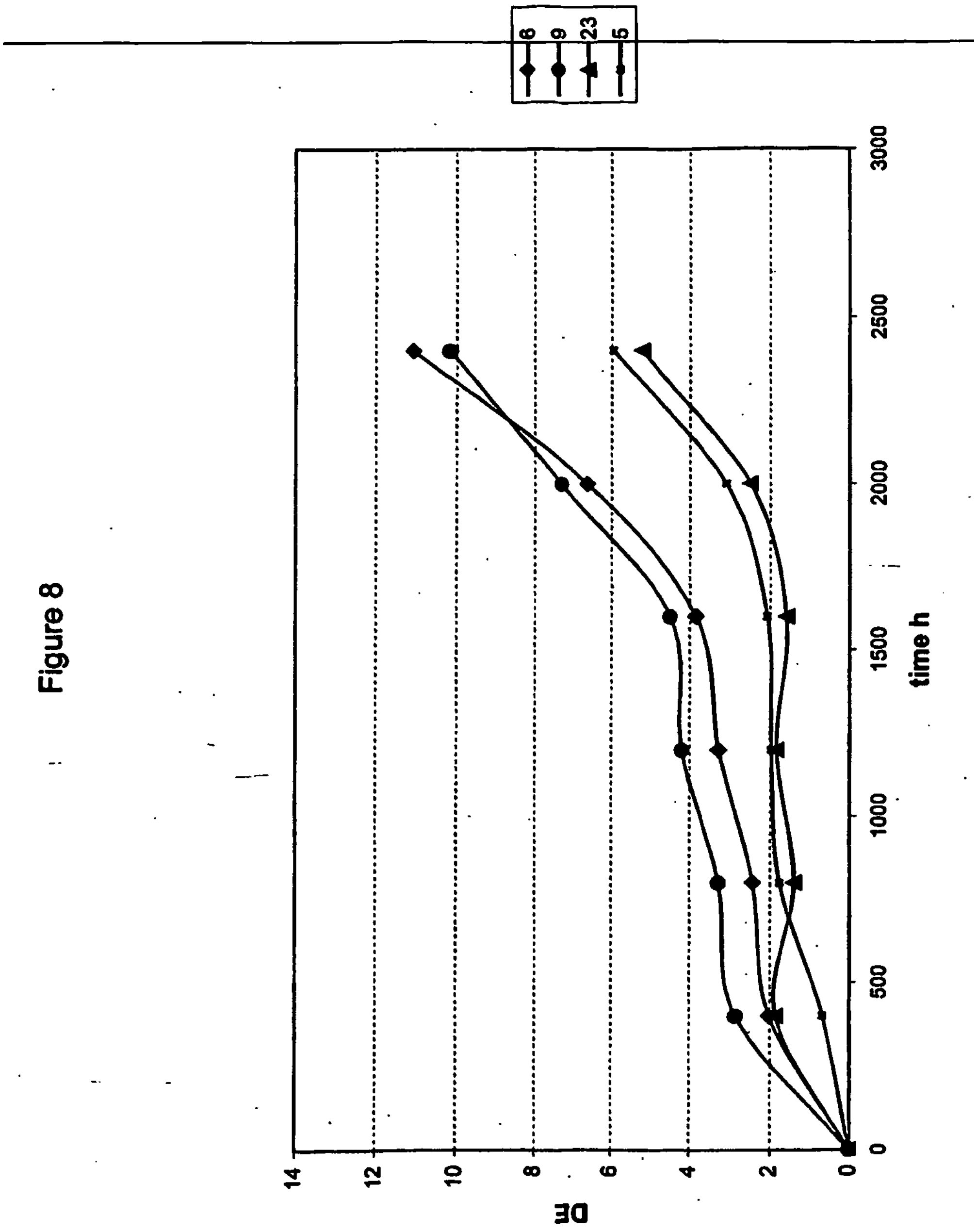

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4957954 A
- US 5025051 A
- US 5492949 A
- US 5543449 A
- US 5519077 A